# EUROPÄISCHE PATENTSCHRIFT

(11) **EP 1 735 067 B1**
(45) Veröffentlichungstag und Bekanntmachung des Hinweises auf die Patenterteilung: **13.12.2017**
(21) Anmeldenummer: 05716426.1
(22) Anmeldetag: 29.03.2005
(51) Int. Cl.: B01D 3/14, B01D 3/00

(54) **DESTILLATIONSKOLONNE MIT EINEM STRÖMUNSMISCHER IN DEM ZULAUF**
DISTILLATION COLUMN WITH IN-LINE MIXER IN THE INLET
COLONNE DE DISTILLATION AVEC UN MÉLANGEUR EN LIGNE DANS L'ALIMENTATION

(30) Priorität: 29.03.2004 DE 102004015727
(43) Veröffentlichungstag der Anmeldung: 27.12.2006
(73) Patentinhaber: Evonik Degussa GmbH, 45128 Essen (DE)
(72) Erfinder: MOSLER, Jürgen, 44577 Castrop-Rauxel (DE)
(74) Vertreter: Lang, Arne
(86) Internationale Anmeldenummer: PCT/EP2005/003272
(87) Internationale Veröffentlichungsnummer: WO 2005/092463

(56) Entgegenhaltungen:
- WO-A-00/53561
- US-A- 2 809 924
- US-A- 3 492 795
- US-A- 3 637 195
- US-B1- 6 641 700

## Beschreibung

Die Erfindung betrifft eine Kolonne zur Destillation eines polymerisationsfahigen Stoffes, insbesondere Methacrylsäure und Acrylsäure, nachfolgend gemeinsam als "(Meth)Acrylsäure" bezeichnet, wobei Acrylsäure besonders bevorzugt ist.

Die Anforderungen an die Reinheit von großtechnisch zur Polymerisation eingesetzten Monomeren steigen zunehmend. Auch an Massenkunststoffen werden immer höhere Reinheitsanforderungen gestellt. Dieses gilt insbesondere für im Medizin- oder Hygienebereich eingesetzte Polymere. Wasser oder wässrige Flüssigkeiten absorbierende Polymere, die allgemein als "Superabsorber" bezeichnet werden, sind ein wichtiger Bestandteil von vielen Produkten im Medizin- oder Hygienebereich. Bevorzugt werden Superabsorber in Windeln, Damenbinden und Inkorltinenzartikeln eingesetzt. Superabsorber sowie andere Kunststoffe werden häufig durch radikalische Polymerisation von eine Doppelbindung aufweisenden Monomeren erhalten. Derartige eine Doppelbindung aufweisende Monomere wie (Meth)acrylsäure sind daher sehr reaktive Substanzen, die bei thermischer Belastung spontan zur radikalischen Polymerisation neigen.

Die Destillation ist eine zum Erzielen hoher Reinheiten geeignete und großtechnisch bewährte Aufarbeitungsmethode. Wegen der bei der Destillation auftretenden thermischen Belastung des zu reinigenden Monomers, neigt diese jedoch leicht zu unerwünschten Polymerisation. Hierbei bilden sich trotz Zugabe von Inhibitoren zunächst meist in Totzonen durch Überhitzung und zu lange Verweilzeiten des Monomers Polymerisationskeime, die im Laufe der Zeit wachsen und zu einer immer mehr zunehmenden Bildung von unerwünschtem Polymer führen, dass zu einer Stillegung des Desüllationsbetriebes und zu einer aufwendigen Reinigung der Destillationsapparatur führt, die sehr kostenträchtig und mit einer erheblichen Belastung für Mensch und Umwelt verbunden ist.

Destillationskolonnen sind beispielsweise aus WO 00/53561 bekannte. In dieser Schrift werden zwar "Dual-Flow-Böden" als Kolonnenböden offenbart, mit denen die Trennleistung erhöht werden soll, es werden jedoch keine Maßnahmen offenbart, mit denen den vorstehenden Nachteilen begegnet werden soll.

Destillationskolonnen sind auch aus US6641700 oder US3492795 bekannt.

Hiervon ausgehend ist es allgemeine Aufgabe der vorliegenden Erfindung, die bekannten technischen Probleme bei der Destillation zu reduzieren bzw. zu überwinden.

Insbesondere ist es ein Ziel der Erfindung, bekannte Kolonnen dahingehend weiterzubilden, dass die Polymerisationsneigung des zu destillierenden Stoffes deutlich reduziert ist.

Weiter ist es eine zugrundeliegende Aufgabe, eine Kolonne anzugeben, die über einen längeren Zeitraum durchgehend betrieben werden kann.

Außerdem sollen die ggf. erforderlichen Wartungs- bzw. Reinigungsprozesse einfacher ausführbar und zeitlich verkürzt werden.

Ferner besteht eine erfindungsgemäße Aufgabe darin, eine Destillationskolonne und ein Destillationsverfahren zur Verfügung zu stellen, dass mit möglichst wenig Kolonnenböden, insbesondere Dual-Flow-Böden, bei möglichst keiner Beeinträchtigung der Trennleistung auskommt.

Die oben genannten Aufgaben werden gelöst durch einen Trennboden mit den Merkmalen des Patentanspruchs 1, ein Verfahren nach den Patentanspruch 14. Weitere vorteilhafte Ausgestaltungen sind in den jeweils abhängigen Patentansprüchen beschrieben, wobei die dort genannten Merkmale beliebig miteinander kombiniert werden können.

Die Kolonne umfasst einen Behälter mit einem Unterboden sowie mindestens einen Zulauf für den polymerisationsfähigen Stoff, der in einen Innenbereich des Behälters führt. Erfindungsgemäß sind dabei Mittel zur gleichmäßigen Verteilung des Stoffes in dem Behälter vorgesehen. Die Mittel können im oder am Zulauf als integrales oder separates Bauteil ausgeführt sein. Weiter können derartige Mittel auch im Innenbereich des Behälters vorgesehen sein. Zudem ist unter Umständen sinnvoll, dass der Behälter als integrales oder separates Bauteil Mittel zur gleichmäßigen Verteilung des Stoffes in dem Behälter umfasst. Aufgrund der Tatsache, dass der polymerisationsfähige Stoff überwiegend in flüssigem Zustand, insbesondere als überhitzte Flüssigkeit, über den Zulauf in den Innenbereich des Behälters strömt, sind die Mittel insbesondere geeignet, das Strömungsverhalten des eingeleiteten, flüssigen, Stoffes zu beeinflussen. Vorzugsweise unmittelbar nach dem Eintritt in den Behälter der Kolonne, verdampft der flüssige Stoff zumindest teilweise, wobei letztendlich ein nach oben aufsteigender_ Dampfstrom gebildet wird. Mit einer gleichmäßigen Verteilung ist insbesondere gemeint, dass der polymerisationsfähige Stoff bereits nach kurzer Zeit (in mindestens seinem zunächst flüssigen oder seinem anschließend gasförmigen Zustand) mit einer über dem Querschnitt des Innenbereichs des Behälters Kolonne gleichmäßigen Strömungsgeschwindigkeit durch den Innenbereich strömt. Dies gilt insbesondere in einem Querschnitt parallel zu einem ersten Trennboden in dessen unmittelbarer Nähe (z.B. in einer Entfernung von weniger als 10 cm). Dieses hat zur Folge, dass die Polymerisationsneigung verringert wird, so dass sich weniger durch Polymerisation gebildete Agglomerate in bzw. an der Kolonne und deren Bauteilen anlagern, und der einwandfreier Betrieb gewährleistet ist.

Eine gleichmäßige Strömung des polymerisationsfahigen Stoffes lässt sich anhand einer Vielzahl unterschiedlicher, dem Fachmann bekannter Kennwerte beschreiben. So können beispielsweise die Stoff-Geschwindigkeiten, die Verteilung der Strömungsrichtung oder andere Kennwerte herangezogen werden. Die Destillation ist zudem durch Strömungen von flüssigen und gasförmigen Bestandteilen des polymerisationsfähigen Stoffes gekennzeichnet, die im wesentlichen entgegengesetzt zueinander gerichtet sind: die Flüssigkeit strömt infolge der Gravitation durch die Trennböden nach unten, während der Gasstrom durch die Trennböden innerhalb der Kolonne aufwärts strömt. Herrschen in einem Querschnitt bzw. einer Ebene des Behälters der Kolonne im wesentlichen gleiche Strömungsverhältnisse, so sind auch die flüssigen und gasförmigen Bestandteile des polymerisationsfähigen Stoffes in dieser Ebene gleichmäßig verteilt. Das gilt nicht nur für den frei durchströmbaren Bereich des Behälters, sondern beispielsweise auch im Inneren der Trennböden. Auch dort lässt sich anhand der Verteilung von Gas-, Flüssig- und Festbestandteilen des polymerisationsfahigen Stoffes erkennen, ob eine gleichmäßige Strömung vorliegt, also beispielsweise keine Ansammlungen von durch Polymerisation gebildeten Agglomeraten vorliegen.

Gemäß einer weiteren Ausgestaltung der Kolonne hat der mindestens eine Zulauf eine Eintrittsöffnung und eine Austrittsöffnung, wobei die Austrittsöffnung näher zum Unterboden des Behälters angeordnet ist als die Eintrittsöffnung. In diesem Zusammenhang sei darauf hingewiesen, dass der Zulauf selbst ein integrales Teil des Behälters sein kann, also die Begrenzungsfläche des Zulaufs selbst Teil des Behälters ist. Der Zulauf kann aber auch ein separates Bauteil sein, welches beispielsweise über einen Anschluss mit dem Behälter verbunden ist. Im letztgenannten Fall erstreckt sich demnach der Zulauf durch eine Anschlussöffnung des Anschlusses in den Innenbereich des Behälters hinein. Dabei sind bevorzugt Dichtungsmittel vorgesehen, die einen Gasaustausch vom Innenbereich des Behälters hin zur äußeren Umgebung des Behälters verhindern. Aufgrund der Tatsache, dass derartige Kolonnen üblicherweise senkrecht stehen, und erfindungsgemäß vorgeschlagen wird, dass die Austrittsöffnung näher zum Unterboden des Behälters angeordnet ist als die Eintrittsöffnung, soll insbesondere bewirkt werden, dass der Stoff in eine Richtung in den Innenbereich des Behälters der Kolonne hineinströmt, die von der direkten Strömungsrichtung während des Destillationsprozesses (insbesondere entgegen der Richtung der Erdbeschleunigung) hin zum Auslaß des einen Produktes verschieden ist. Mit dem so erzwungenen Richtungswechsel wird eine Verwirbelung bzw. ein Ausgleich von Konzentrationsunterschieden des Stoffes im Querschnitt des Innenbereichs erreicht.

In diesem Zusammenhang ist es besonders vorteilhaft, dass der mindestens eine Zulauf eine Austrittsöffnung hat, die im wesentlichen parallel zum Unterboden angeordnet ist. Damit ist insbesondere gemeint, dass der polymerisationsfähige Stoff in eine Richtung in den Innenbereich des Behälters der Kolonne eingeleitet wird, die der direkten Strömungsrichtung im wesentlichen entgegengesetzt ist. Daraus lässt sich auch entnehmen, dass der polymerisationsfähige Stoff im wesentlichen senkrecht zur Austrittsöffnung in den Innenbereich hineinströmt. Eine parallele Anordnung der Austrittsöffnung hin zum Unterboden hat zudem den Vorteil, dass bei einer ausreichend hohen Strömungsgeschwindigkeit des einströmenden Stoffes der Unterboden als eine Art Prallplatte fungiert. Das bedeutet, dass der auftreffende Stoff verwirbelt wird, wobei der Unterboden bevorzugt so gestaltet ist, dass wiederum Totzonen, in denen der gasförmige Stoff verflüssigt wird und ein Teil des verflüssigten Stoffs so lange verbleibt, dass dieser sich durch Polymerisation zum Teil verfestigen kann, vermieden werden. Bevorzugt ist dabei die Austrittsöffnung des Zulaufs zentrisch zu einer Zentrumsachse des Behälters positioniert, um eine gleichmäßige Verteilung des einströmenden Stoffes zu gewährleisten. Sind mehrere Zuläufe vorgesehen, so sind diese bevorzugt symmetrisch zur Zentrumsachse, insbesondere innerhalb einer Querschnittsebene parallel zum Unterboden bzw. den Trennböden, angeordnet.

Gemäß einer vorteilhaften Weiterbildung der Kolonne wird vorgeschlagen, dass der mindestens eine Zulauf eine Austrittsöffnung hat, wobei über eine Strecke des mindestens einen Zulaufs, bevorzugt zumindest nahe der Austrittsöffnung, mindestens ein Strömungsbeeinflusser angeordnet ist. Derartige Strömungsbeeinflusser können einerseits auf der Außenseite des Zulaufs, also im Innenbereich des Behälters der Kolonne angeordnet sein. Es ist jedoch anderseits in Kombination oder auch alternativ dazu möglich, derartige Strömungsbeeinflusser im Inneren des Zulaufs zu positionieren. Derartige Strömungsbeeinflusser im Inneren des Zulaufs haben insbesondere die Funktion, das Strömungsverhalten des polymerisationsfähigen Stoffes beim Eintritt in den Innenbereich an die im Innenbereich der Kolonne herrschenden Umgebungsbedingungen anzupassen. Der Strömungsbeeinflusser nach der Erfindung verursacht eine gewisse Verwirbelung des Stoffes wobei dies insbesondere dann in Betracht kommt, wenn der Behälter selbst nicht unmittelbar zur Vergleichmäßigung des einströmenden Stoffes beiträgt. Dient ein solcher Strömungsbeeinflusser primär der Verwirbelung des Stoffes im Inneren des Zulaufs, so ist dieser üblicherweise über eine relativ kurze Strecke ausgeführt, insbesondere über eine Strecke im Bereich von 2 mm bis 100 mm, vorzugsweise von 10 mm bis 50 mm und besonders bevorzugt von 15 mm bis 35 mm, wobei dieser bevorzugt in einem gekrümmten Bereich des Zulaufs angeordnet ist und eine solche Verwirbelung im Inneren des Zulaufs verursacht, dass der in den Innenbereich eintretende flüssige Stoff schnell und zu einem sehr großen Anteil in den dampfförmigen Aggregatzustand wechselt. Eine gleichmäßige Strömung hin zu den Trennböden kann beispielsweise durch zusätzliche Mittel bewirkt werden.

Hierfür eignen sich insbesondere temperatur- und korrosionsbeständige, ggf. faserartige, Materialien, die chaotisch, unregelmäßig, in Wirrlage zueinander, als Gewebe oder in einer ähnlichen Weise zueinander angeordnet sind. Dabei weisen sie bevorzugt eine Vielzahl von Abrisskanten oder Anströmflächen oder beides auf, die eine Verwirbelung des polymerisationsfähigen Stoffes zur Folge haben. Andererseits ist es aber auch möglich, dass ein solcher Strömungsbeeinflusser die Funktion hat, eine nahezu laminare Strömung, insbesondere beim Eintritt in den Innenbereich der Kolonne, zu generieren.

Als besonders bevorzugte Ausführungsform hat sich bewährt, dass der mindestens eine Strömungsbeeinflusser wenigstens ein Leitblech aufweist, so dass eine Mehrzahl von Kanälen über die Strecke des Zulaufs gebildet sind. Bei einer solchen Ausgestaltung des Strömungsbeeinflussers ist dieser bevorzugt im Inneren des Zulaufs über eine Strecke im Bereich von 100 mm bis 2000 mm, vorzugsweise von 400 mm bis 1500 mm und besonders bevorzugt von 700 mm bis 1000 mm ausgeführt. Dabei ist besonders bevorzugt, dass mehrere Leitbleche in Strömungsrichtung des Stoffes hintereinander angeordnet sind, wobei sich diese grundsätzlich insgesamt zumindest im Bereich, bevorzugt über die gesamte Strecke des Bereichs, des Krümmungsabschnitts des Zulaufs erstrecken. Bezüglich des Strömungsbeeinflussers ist es auch möglich, dass sich dieser auch bis in den Innenbereich des Behälters hinein erstreckt, so dass ein Überstand von vorzugsweise im Bereich von 50 mm bis 200 mm gebildet ist.

Die Unterteilung des Zulaufs in eine Mehrzahl von Kanälen bietet den Vorteil, dass Teilströme gebildet werden, wobei sich bei zunehmend kleineren Kanalquerschnitten schon nach immer kürzeren Wegen eine gerichtete, ggf. nahezu laminare, Strömungen in den Kanälen bilden. Die Anzahl solcher Kanäle ist u. a. unter Berücksichtigung der Ausgestaltung des Behälters bzw. dessen Innenraum zu wählen. Das bedeutet, dass für den Fall, dass außerhalb des Zulaufs ausreichend Mittel zur gleichmäßigen Verteilung des Stoffes gegeben sind, ein möglichst zielgerichtetes Einströmen hin zu diesen Mitteln einstellbar ist. Dabei werden bevorzugt kleine Kanalquerschnitte bzw. eine hohe Kanalanzahl eingesetzt. Hierbei bieten sich einzelne Leitbleche, miteinander verbundene Leitbleche, strukturierte Leitbleche oder ähnliche Konstruktionen an, wobei diese unter Umständen auch als eine Art Wabenstruktur ausgebildet sein kann. Das Prinzip der Wabenstruktur meint damit insbesondere eine Vielzahl von separierten Kanälen, die im wesentlichen parallel zueinander angeordnet sind, wobei ggf. auch Durchbrechungen in den Leitblechen vorgesehen sein können, so dass miteinander kommunizierende Kanäle gebildet sind. In diesem Zusammenhang ist es bevorzugt, dass die Kanaldichte als Kanalanzahl / Einheitsquerschnittsfläche im Zulauf nicht mehr als 5 Kanäle/cm², besonders bevorzugt nicht mehr als 3 Kanäle/cm², insbesondere nicht mehr als 1 Kanal/cm² und ganz bevorzugt nicht mehr als 0,5 Kanäle/cm² oder sogar weniger als 0,25 Kanäle/cm² beträgt.

Grundsätzlich ist die Unterteilung des einströmenden, flüssigen Stoffes auch vorteilhaft, da so ein vollständigeres Entspannen bzw. eine vollständigere Umwandlung in den dampfförmigen Zustand erreicht wird, wenn der Stoff einem Absolutdruck im Bereich von 50 bis 400 hPa, vorzugsweise 100 bis 300 hPa und besonders bevorzugt 150 bis 250 hPa im Innenbereich der Kolonne ausgesetzt wird (wobei 1 hPa = 1 mbar = 10² Newton/Meter² [N/m²] = 10² Pa). Eine ähnliche Wirkung wird durch einen Zulauf erreicht, der als Strömungsbeeinflusser an seiner Austrittsseite eine Mehrzahl von Düsen oder Rohröffnungen hat (z.B. im Bereich von 10 bis 30, und besonders bevorzugt von 12 bis 25), die bevorzugt symmetrisch, insbesondere mit gleichem Abstand, zur Mittelachse des Zulaufs angeordnet sind.

Bei einer weiteren Ausgestaltung der Kolonne mit mindestens einem Zulauf, der eine Austrittsöffnung hat, ist im Innenbereich des Behälters , insbesondere zentrisch zu einer Mittelachse der Austrittsöffnung, mindestens ein Strömungsverteiler angeordnet. Der geschilderte Fall, bei dem der mindestens eine Strömungsverteiler senkrecht zur Mittelachse der Austrittsöffnung positioniert ist, gilt insbesondere dann, wenn der polymerisationsfähige Stoff auch im wesentlichen parallel zur Mittelachse der Austrittsöffnung aus dem Zulauf ausströmt. Für den Fall, dass beispielsweise unter Einsatz der oben genannten Leitbleche eine hiervon abweichende Richtung des Stoffes erzeugt wird, so ist es unter Umständen vorteilhaft, den mindestens einen Strömungsverteiler zentrisch zu dieser Ausströmrichtung anzuordnen. Der Strömungsverteiler hat insbesondere die Funktion, die räumlich eher eng begrenzte Strömung, die aus dem Zulauf austritt, schnell und gleichmäßig im Innenbereich des Behälters der Kolonne zu verteilen. Dabei kann der Strömungsverteiler beispielsweise wiederum als Prallfläche ausgebildet sein, es ist jedoch auch möglich, dass der Strömungsverteiler zumindest teilweise für den anströmenden Stoff durchströmbar ist. Im letztgenannten Fall wäre beispielsweise der Einsatz von Sieben, Gittern oder ähnlichen Gebilden möglich. Dieses bietet den Vorteil, dass auch in Strömungsrichtung des einströmenden Stoffes gesehen, hinter dem Strömungsverteiler ein Teil des polymerisationsfähigen Stoffes gelangt und somit rasch eine gleichmäßige Verteilung bewirkt wird.

Bei der Ausgestaltung eines solchen Strömungsverteilers ist es besonders vorteilhaft, dass der mindestens eine Strömungsverteiler mindestens teilweise, vorzugsweise mindestens zu 30 %, besonders bevorzugt mindestens zu 70 % der Mittelachse und darüber hinaus bevorzugt vollständig kegelförmig gestaltet ist, wobei eine Spitze oder bei einer Stumpfkegelform der Bereich mit dem kleinsten Radius des Strömungsverteilers auf der Mittelachse der Austrittsöffnung so angeordnet ist, dass die Spitze der Austrittsöffnung am nächsten ist. Zunächst sei darauf hingewiesen, dass mit Spitze nicht notwendigerweise bzw. ausschließlich ein scharfkantiger Vorsprung gemeint ist, vielmehr sind auch leicht abgerundete Spitzen hierunter zu subsumieren. Dabei wird hier wieder davon ausgegangen, dass der polymerisationsfähige Stoff senkrecht zur Austrittsöffnung des Zulaufs ausströmt, die Spitze also zentrisch dem ausströmenden Stoff gegenübersteht. Hierbei gilt wiederum der Sachverhalt, dass es unter Umständen vorteilhaft ist, den kegelförmigen Strömungsverteiler mit seiner Spitze neben der Mittelachse zu positionieren, wenn der Stoff nicht senkrecht zur Austrittsöffnung aus dem Zulauf ausströmt. Mit Bezug auf die kegelförmige Ausgestaltung des Strömungsverteilers sei noch darauf hingewiesen, dass der Strömungsverteiler sowohl als hohles Profil (darunter ist insbesondere ein nicht geschlossenes Kegelprofil zu verstehen, wobei vorzugsweise Bleche, Gewebe oder ähnliche, insbesondere dünnwandige, ggf. perforierte, Materialien zur Gestaltung eingesetzt werden) oder auch als Massivkörper (also entweder ein geschlossenes Profil aus dünnen Materialien oder ein Körper ohne Hohlräume) ausgebildet sein kann. Diese kegelförmige Ausgestaltung des Strömungsverteilers hat den Vorteil, dass bei einer zentrischen Anströmung des Stoffes dieser von der Spitze her über die Mantelflächen des Kegels in alle radialen Richtungen gleichmäßig aufgefächert wird. Dabei tritt eine relativ sanfte Umlenkung auf, so dass unerwünscht starke Verwirbelungen vermieden werden.

Gemäß einer weiteren Ausgestaltung der Kolonne umfasst der Behälter wenigstens eine Leitfläche. Die Leitfläche kann wiederum integraler Bestandteil des Behälters selbst sein, es ist jedoch auch möglich, dass es sich hierbei um ein separates Bauteil handelt, welches beispielsweise durch fügetechnisch Fertigungsverfahren mit dem Behälter verbunden ist. Auch diese Leitfläche hat die Funktion, ein bestimmtes Strömungsprofil bzw. eine gezielte Umlenkung von Teilstoffströmen zur gleichmäßigen Verteilung des einströmenden, polymerisationsfähigen Stoffes zu bewirken. Dabei ist es besonders vorteilhaft, wenn der einströmende, polymerisationsfähige Stoff unter Einsatz mindestens zwei der folgenden Mittel im Innenbereich der Kolonne gleichmäßig verteilt wird: mittels dem Zulauf selbst, durch wenigstens einen Strömungsbeeinflusser des Zulaufs, mittels mindestens eines Strömungsverteilers oder wenigstens einer Leitfläche des Behälters. In diesem Zusammenhang sei noch angemerkt, dass als ein Unterscheidungskriterium zwischen Strömungsverteiler, der unter Umständen auch mit der Kolonne in irgendeiner Weise verbunden ist, und der Leitfläche des Behälters die Position der Strömungskanten bzw. -flächen in Bezug auf die Behälterwandung geeignet ist. Dabei grenzt die Leitfläche des Behälters unmittelbar an den Behälter an bzw. die Leitfläche ist selbst Teil der Innenwandung des Behälters. Beim Strömungsverteiler ist beispielsweise die kegelartige Mantelfläche von der Innenwandung des Behälters beabstandet, wobei spezielle Halterungen vorgesehen sind, die den Strömungsverteiler mit beispielsweise der Innenwandung des Behälters oder aber auch dem Zulauf selbst verbinden.

Gemäß einer weiteren Ausgestaltung der Kolonne wird vorgeschlagen, dass der mindestens eine Zulauf Mittel zur thermischen Isolierung gegenüber dem Innenbereich aufweist. Üblicherweise sind solche Destillations-Kolonnen mit Zwangsumlaufüberhitzern ausgestattet, wobei der polymerisationsfähige, flüssige Stoff überhitzt und anschließend dampf- bzw. gasförmig über den Zulauf in den Innenbereich des Behälters der Kolonne geführt wird. Aufgrund dieser Tatsache hat der Zulauf üblicherweise eine im Verhältnis zum Innenbereich des Behälters deutlich höhere Temperatur. Diese Temperaturdifferenz kann dazu führen, dass sich auf der Oberfläche des Zulaufs beispielsweise flüssige, tropfenförmige Ansammlungen des polymerisationsfähigen Stoffes anlagern, wobei es ggf. zur Ausbildung von zähen, im wesentlichen ortsfesten Verklumpungen kommt.

In diesem Zusammenhang wird insbesondere vorgeschlagen, dass die Mittel zur thermischen Isolierung auf zumindest einem Teilbereich des Zulaufs angeordnet sind, der sich in den Innenbereich des Behälters der Kolonne hineinerstreckt. Somit ist bevorzugt, dass sich die Mittel zur thermischen Isolierung nicht über bzw. in dem gesamten Zulauf erstrecken, sondern auch nur für die Ansammlung geeignete Teilbereiche mit solchen thermischen Isolationsmitteln versehen sein können. Besonders kritisch sind in diesem Zusammenhang die Teilbereiche bzw. Stellen des Zulaufs, die Vertiefungen, Spalte, Kapillare, Materialgrenzen oder ähnliches umfassen. Diese Teilbereiche sind besonders geeignet, als Reservoir für gasförmige oder flüssige, polymerisationsfähige Stoffe zu dienen. Da diese Bereiche beispielsweise beim Austritt des Zulaufs aus dem Behälter auftreten können, ist es unter Umständen vorteilhaft, den Zulauf auch über den Innenbereich des Behälters hinaus mit thermischen Isolierungen zu versehen.

Gemäß einer weiteren Ausgestaltung wird vorgeschlagen, dass die Mittel zur thermischen Isolierung durch einen Zulauf aus mindestens teilweise thermisch isolierendem Material gebildet sind. Das bedeutet beispielsweise, dass der Zulauf selbst mit einem thermisch isolierenden Material gebildet ist. Es ist jedoch auch möglich, den Zulauf gegenüber dem Innenbereich der Kolonne mit einer thermisch isolierenden Beschichtung bzw. Hülle zu versehen. Dabei wird unter Beschichtung verstanden, dass das thermisch isolierende Material vorzugsweise fügetechnisch auf die Oberfläche des Zulaufs aufgetragen wird (insbesondere die beiden Materialien miteinander eine gemeinsame Grenzschicht bilden), während mit Hülle eine klar abgrenzbare, vorzugsweise lösbar am oder im Zulauf angebrachte Komponente verstanden wird.

In diesem Zusammenhang sei angemerkt, dass die Anzahl bzw. die Stärke des den Zulauf umgebenden thermisch isolierenden Materials im wesentlichen vom Temperaturunterschied zwischen dem überhitzten einströmenden Stoff und dem Innenbereich der Kolonne zu wählen ist, insbesondere im Bereich von 1 °C bis 30°C, vorzugsweise von 5°C bis 25°C, und besonders bevorzugt von 8°C bis 15°C.

Gemäß einer vorteilhaften Weiterbildung wird vorgeschlagen, dass der mindestens eine Zulauf mehrere Umhüllungen hat, wobei bevorzugt eine thermisch isolierende Schicht zwischen wenigstens zwei Umhüllungen vorgesehen ist. Die Umhüllungen, die insbesondere koaxial zueinander angeordnet sind, bilden, unabhängig davon, ob sie voneinander beabstandet sind oder miteinander in Kontakt sind, eine Art Grenzschicht. Diese Grenzschicht hat zur Folge, dass ein Wärmeübergang von der innenliegenden Hülle auf die äußere Hülle bzw. umgekehrt behindert wird. Dieser Effekt wird weiter verstärkt, wenn zwischen den Umhüllungen eine zusätzliche, thermisch isolierende, Schicht aus einem Material mit einer vorzugsweise geringen Wärmeleitfähigkeit angeordnet ist. Hierfür bieten sich beispielsweise anorganische Quellmatten oder ähnliche Komponenten an, die ggf. auch thermische Differenzdehnungen der Komponenten des Zulaufs kompensieren können.

Bei einer Ausgestaltung des Zulaufs mit mehreren Umhüllungen ist es bevorzugt, dass die zwischen den Umhüllungen vorgesehene thermisch isolierende Schicht ein Vakuum ist, wobei vorzugsweise wenigstens eine Innenfläche der mehreren Umhüllungen verspiegelt ist. Durch das Vakuum zwischen beispielsweise zwei koaxial zueinander angeordneten Umhüllungen (doppelwandiges Mantelrohr) wird die Wärmeübertragung von einer Umhüllung auf die andere auf dem Wege der Konvektion unterbunden. Zur Verhinderung von Wärmestrahlung ist wenigstens eine der Innenflächen der Umhüllungen verspiegelt.

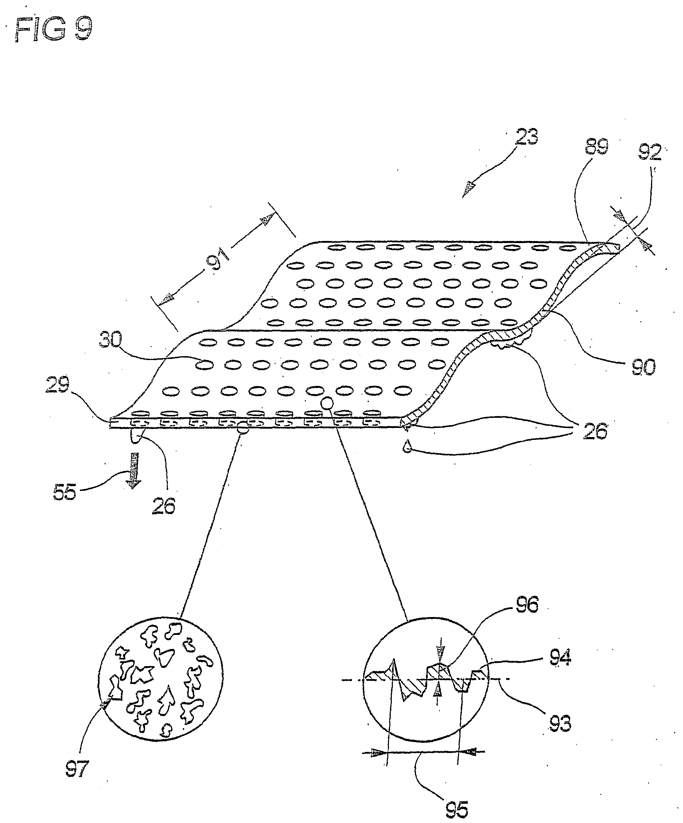

Gemäß einer weiteren Ausgestaltung der Kolonne weist der mindestens eine Zulauf zumindest in einem Teilabschnitt eine Beschichtung auf, die eine gegenüber Stahl verbesserte Gleiteigenschaft für Flüssigkeiten aufweist. Dabei ist es bevorzugt, dass die gesamte Oberfläche hin zum Innenbereich der Kolonne mit einer solchen Beschichtung versehen ist. Als Beschichtung werden insbesondere ein Polyfluorkohlenwasserstoff, vorzugsweise Teflon, Polyanilin-Lacke bzw. Beschichtung mit einer Metall-Ionen-freien Oberfläche (z.B. Glas) oder auch Gemische von mindestens zwei dieser Beschichtungsarten vorgeschlagen. Wird Glas als Beschichtungsmittel eingesetzt, so ist inbesondere technisches Glas, welches aus abgekühlten Schmelzen von Siliziumdioxid (SiO₂), Calciumoxid (CaO), Natriumoxid (Na₂O) gegebenenfalls mit größeren Mengen an Bortrioxid (B₂O₃), Aluminiumoxid (AL₂O₃), Bleioxid (PbO), Magnesiumoxid (MgO), Bariumoxid (BaO) oder Kaliumoxid (K₂O erhalten wurde, bevorzugt. Vorzugswiese besteht dieses technische Glas zu mindestens 50 Gew.-%, darüber hinaus bevorzugt zu mindestens 65 Gew.% und am meisten bevorzugt zu mindestens 80 Gew.-% aus SiO₂ Die Beschichtung bewirkt, dass Ansammlungen bzw. Anlagerungen von flüssigen bzw. zähflüssigen oder festen polymerisationsfähigen Stoffen auf dem Zulauf reduziert wird. Dabei ist es generell vorteilhaft, auch andere Bereiche der Kolonne bzw. des Behälters oder anderer Komponenten im Innenraum der Kolonne mit einer solchen Beschichtung zu versehen. Nähere Angaben zur Beschaffenheit bzw. Ausführungsform der Flächen bzw. Beschichtungen können der Beschreibung zu Figur 9 entnommen werden.

Gemäß einer Weiterbildung der Kolonne ist der mindestens eine Zulauf zwischen dem Unterboden und einem Trennboden angeordnet. Das bedeutet insbesondere, dass mittels dem Unterboden eine Umlenkung des einströmenden polymerisationsfähigen Stoffes bewirkt wird, und dieser Stoff erneut den Bereich des Zulaufs passiert, bevor dieser erstmalig durch den Trennboden hindurchtritt.

Weiter wird auch vorgeschlagen, dass der Behälter eine Mehrzahl von Trennböden aufweist und mindestens eine Sprühanlage vorgesehen ist, mit der eine Unterseite wenigstens eines Trennbodens mit dem polymerisationsfähigen Stoff besprühbar ist. Eine solche Sprühanlage entfernt wirkungsvoll an der Unterseite des Trennbodens anhaftende Teilmengen des polymerisationsfähigen Stoffes, so dass eine Polymerisation an diesen Stellen vermieden werden kann. Bevorzugt ist dabei die Ausgestaltung, bei der der unterste Trennboden der Kolonne in Reichweite einer solchen Sprühanlage positioniert ist. Dabei ist vorteilhaft, dass die Sprühanlage mit flüssigem polymerisationsfähigem Stoff aus dem Sammelbecken des Behälters versorgt wird und dieses gleichmäßig verteilt auf die Unterseite des Trennbodens gesprüht wird. Die Sprühanlage weist bevorzugt eine Mehrzahl von Düsen auf, die über den Querschnitt des Trennbodens gleichmäßig verteilte Sprühbereiche bilden. Ganz besonders bevorzugt wird die Sprühanlage mit hohem Druck betrieben, z.B. im Bereich von 2 bis 5 bar, bevorzugt um 3 bar. Weiter ist bevorzugt, dass die Sprühanlage in einer geringen Entfernung zur Unterseite des Trennbodens positioniert ist, beispielsweise höchstens 1 Meter oder 50 cm, wobei dies unter Berücksichtigung des Sprühbereichs und/oder der Anzahl der Düsen variiert werden kann.

Weiterhin betrifft die Erfindung ein Verfahren zur Aufreinigung eines polymerisationsfähigen Stoffes, wobei der polymerisationsfähige Stoff in einer erfindungsgemäßen Kolonne durch den Zulauf als eine Stoff-Flüssigkeit eingebracht und in dem Innenbereich in eine zumindest teilweise Stoff-Gasphase überführt wird. Hierbei ist es bevorzugt, dass die Stoff-Gasphase einen oberhalb des Zulaufs angeordneten ersten Trennboden mit einer isotropen Dichte anströmt, wobei innerhalb einer Ebene zwischen dem Zulauf und dem ersten Trennbodens die maximale Abweichung um einen Mittelwert der isotropen Dichte höchstens 15% beträgt. Besonders vorteilhaft ist, wenn die maximale Abweichung höchstens 10% beträgt, insbesondere nur 5%. Die Ebene liegt dabei bevorzugt relativ dicht und parallel zu dem ersten Trennboden, um einen relativ kompakten Aufbau der Kolonne sicherzustellen. Die Ebene liegt dabei vorzugsweise höchstens 100 mm_unterhalb des ersten Trennbodens, der Abstand der Ebene vom ersten Trennboden kann jedoch auch maximal 50 mm oder sogar nur höchstens 10 mm betragen.

Einen besonders gleichmäßige Destillation mit einer sehr geringen Polymerisationsneigung in der Kolonne ist gegeben, wenn der mindestens eine Trennboden so gestaltet ist, dass sich die isotrope Dichte auch in der flüssigen Phase des polymerisationsfähigen Stoffes einstellt. Dies lässt sich in besonderem Maße durch den Einsatz eines sogenannten "Dual-Flow-Bodens" erreichen. Dabei lassen sich ggf.

Strömungen der Stoff-Gasphase über die Trennböden hinweg mit der vorgeschlagenen isotropen Dichte verwirklichen, wobei die auftretende maximale Abweichung weiter deutlich reduziert wird.

Ein solcher Trennboden für eine Kolonne zur Destillation eines polymerisationsfähigen Stoffes umfasst zumindest eine Bodenplatte mit einer Vielzahl von Öffnungen und mindestens einen Aufsatz, der die Vielzahl von Öffnungen in Gruppen aufteilt, wobei mit dem mindestens einen Aufsatz für ein Fluid durchströmbare Durchlässe gebildet sind.

Die Bodenplatte umfasst bevorzugt metallisches Material, allerdings sind auch andere, temperatur- und säurebeständige Materialien einsetzbar. Die äußere Gestalt der Bodenplatte ist mit Rücksicht auf die Destillationskolonne zu wählen, so dass diese beispielsweise runde, rechteckige oder ähnliche Formen aufweisen kann. Die Bodenplatte ist mit einer Vielzahl von Öffnungen versehen, womit insbesondere gemeint ist, dass ein Flüssigkeits- und/oder Gasaustausch durch die Bodenplatte hindurch möglich ist. Dabei sind die Öffnungen bevorzugt so groß, dass ein Aufstauen des flüssigen Stoffes möglich ist, sich bevorzugt sogar eine Sprudelschicht zum Wärme- und Komponentenaustausch zwischen dem flüssigen und dampfförmigen Stoffes bildet. Die Ausrichtung der Öffnungen bezüglich der Bodenplatte ist grundsätzlich frei wählbar und mit den Bedingungen im Inneren der Kolonne abzugleichen. So ist es beispielsweise möglich, eine gleichmäßige Verteilung der Öffnungen über die gesamt Bodenplatte bereitzustellen, allerdings kann es unter Umständen auch erforderlich sein, eine hiervon abweichende Gestaltung der Bodenplatte vorzunehmen. Dies wäre beispielsweise dann der Fall, wenn Randbereiche der Bodenplatte zur Lagerung in der Kolonne benötigt werden. Ähnliches gilt zum Beispiel, wenn die Bodenplatte aufgrund ihrer räumlichen Ausdehnung von einer Seite her gestützt werden muss und die Stützen derartige Öffnungen verschließen würden. Sodann ist es vorteilhaft, in diesen Bereichen der Bodenplatte keine Öffnungen vorzusehen.

Nun wird vorgeschlagen, dass der Aufsatz die Vielzahl von Öffnungen in Gruppen aufteilt, wobei mit dem mindestens einen Aufsatz für ein Fluid durchströmbare Durchlässe gebildet sind. Eine vordergründige Funktion dieses Aufsatzes ist es, die Bewegung der Flüssigkeit, die sich auf der Bodenplatte angesammelt hat, so zu beeinflussen, dass einerseits eine hohe Fließgeschwindigkeit vermieden wird, andererseits aber auch keine "Totzonen" gebildet sind, in denen relativ lange Verweilzeiten der Flüssigkeiten herrschen.

Besonders hohe Fließgeschwindigkeiten können beispielsweise auftreten, wenn der durch die Bodenplatte hindurchtretende gasförmige Stoff nicht vollkommen gleichmäßig über den Querschnitt der Bodenplatte eingeleitet wird, sondern in einem Bereich eine besonders starke Quelle gebildet ist. Dann kann es zu einer wellenförmigen Anregung der Flüssigkeit kommen. Um zu verhindern, dass sich eine derartige Wellenfront über die gesamte Bodenplatte ausbreitet und somit zu unterschiedlichen Flüssigkeitspegeln auf der Bodenplatte führt, dient der Aufsatz als eine Art Wellenbrecher, indem obere Flüssigkeits- bzw. Dampfblasenschichten schwingungsberuhigt werden.

Allerdings gewährleistet die räumlich strikt voneinander abgegrenzte Aufteilung der Bodenplatte in verschiedene Sektoren nicht zwingend ein besseres Fließverhalten der Flüssigkeit. Vielmehr werden durch die Aufteilung unter Umständen Gruppen von Öffnungen gebildet, die weniger mit dem polymerisationsfahigen Stoff beaufschlagt werden, so dass sich hinsichtlich der Sektoren unter Umständen unterschiedliche Destillationsgrade ergeben. Aus diesem Grund wird vorgeschlagen, dass die Flüssigkeit zwar durch den Aufsatz in ihrer Bewegungsfreiheit eingeschränkt, aber hinsichtlich der Erreichbarkeit einer Vielzahl von Öffnungen anderer Sektoren (insbesondere aller Öffnungen) nicht begrenzt wird. Dies wird dadurch gewährleistet, dass dennoch mit dem Absatz für ein Fluid durchströmbare Durchlässe gebildet sind. Die Durchlässe gewährleisten, dass das Fluid vorzugsweise zu jeder Öffnung der Bodenplatte einströmen kann.

Die Gestalt des Durchlasses ist auch hier wieder unter Berücksichtigung der Flüssigkeit, des polymerisationsfähigen Stoffes, der Kolonne oder deren Betrieb zu wählen. Beispielhaft seien an dieser Stelle runde Durchlässe, rechteckige Durchlässe, Schlitze, etc. genannt. Dabei sei auch klargestellt, dass die Durchlässe vollständig oder teilweise von dem Aufsatz begrenzt bzw. gebildet sein können. Grundsätzlich ist es bei der Anordnung derartiger Durchlässe vorteilhaft, diese in unteren, d.h. bodenplattennahen, Bereichen anzuordnen. Auf diese Weise wird sichergestellt, dass einerseits die Fortpflanzung der Wellenbewegung der oberen Flüssigkeits- bzw. Fluidschichten unterbrochen wird, während tieferliegende Schichten nahe verschiedener Gruppen von Öffnungen miteinander kommunizieren können. Dabei ist darauf zu achten, dass die Durchlässe so gestaltet sind, dass möglichst wenige, bevorzugt keine, Totzonen gebildet sind, wobei hiermit Zonen gemeint sind, in denen das Fluid eine relativ lange Verweilzeit hat.

Die Flüssigkeit neigt in derartigen Totzonen zur Polymerisation, wobei dies langfristig zur zumindest teilweisen Verstopfung der Öffnungen führen kann. Das hat zur Folge, dass der Gas- bzw. Flüssigkeitsaustausch durch eine kleinere Anzahl von Öffnungen nur noch erfolgt, wobei der zunehmende Gasdruck eine zusätzliche Schwingungsanregung der Flüssigkeit zur Folge hat. Bei zunehmender Polymerisation des Stoffes kann der Destillationsschritt nicht mehr in der gewünschten Qualität durchgeführt werden, wodurch Reinigungs- bzw. Wartungsmaßnahmen erforderlich sind. Dies wiederum hat zur Folge, dass der Destillationsprozess unterbrochen und die Kolonne stillgelegt werden muss. Die Trennböden müssten in einem aufwendigen Verfahren wieder gereinigt und anschließend montiert werden. Durch den hier vorgeschlagenen Aufsatz auf der Bodenplatte können derartige, aufwendige Maßnahmen zumindest über einen längeren Zeitraum hinaus aufgeschoben werden. Aufgrund der Tatsache, dass an deutlich wenigeren Stellen Polymer-Ablagerungen auftreten, ist die Reinigung auch schneller durchführbar. Das bedeutet, dass die Destillationskolonne einerseits über einen längeren Zeitraum mit den gewünschten Destillationsergebnissen einsatzbereit ist, andererseits aber auch die Reinigungsprozedur schneller ausgeführt werden kann und somit die Stillstandszeiten der Destillationskolonne verkürzt sind.

Im Allgemeinen kommen erfindungsgemäß alle dem Fachmann bekannten zur Polymerisation neigenden chemischen Verbindungen als polymerisationsfähige Stoffe in betracht. Bevorzugte polymerisationsfähige Stoffe sind bei der Herstellung von Massenkunststoffen verwendete Monomere wie Styrol, α-Methylstyrol, Methylmethacrylat, Butylacrylat und der gleichen. Weiterhin ist es bevorzugt, dass der in dem erfindungsgemäßen Verfahren eingesetzte polymerisationsfähige Stoff (Meth)Acrylsäure ist. Der Begriff "(Meth)Acrylsäure" steht vorliegend sowohl für die Verbindung mit dem Nomenklaturnamen "Acrylsäure" als auch for die Verbindung mit dem Nomenklaturnamen "Methacrylsäure", wobei Acrylsäure von beiden bevorzugt ist. Zudem ist bevorzugt, dass bei dem erfindungsgemäßen Verfahren im Innenbereich ein Absolutdruck herrscht. Dieser liegt bevorzugt im Bereich von 50 bis 400 hPa (Hektopascal), vorzugsweise 100 bis 300 hPa und besonders bevorzugt 150 bis 250 hPa im Innenbereich der Kolonne ausgesetzt wird (wobei 1 hPa = 1 mbar = 10² Newton/Meter² [N/m²] = 10² Pa).

Zudem ist es in dem erfindungsgemäßen Verfahren bevorzugt, dass die Stoff-Flüssigkeit überhitzt ist. In diesem Zusammenhang ist es bevorzugt, dass die Temperatur der Hauptkomponente der Stoff-Flüssigkeit, meist der polymerisationsfähige Stoff, mindestens um 1 °C, vorzugsweise mindestens um 5 °C und besonders bevorzugt mindestens um 10 °C über der Siedetemperatur der reinen Hauptkomponente der Stoff-Flüssigkeit liegt.

Ferner betrifft die Erfindung ein Verfahren zur Herstellung eines polymerisationsfähigen Stoffs, wobei der polymerisationsfähige Stoff aus mindestens einem Edukt in einem Reaktor synthetisiert und nachfolgend einem erfindungsgemäßen Verfahren zum Aufreinigen unterzogen wird. Die Synthese des polymerisationsfähigen Stoffs ist nicht auf ein bestimmtes Verfahren beschränkt. Vielmehr kommen alle dem Fachmann bekannten Verfahren in Betracht. Bei der Synthese von Acrylsäure ist eine vorzugsweise mindestens zweistufige Gasphasenoxidationsreaktion, bei der bevorzugt in einem ersten Schritt durch katalytische Oxidation von Propylen Acrolein und in einem weiteren Schritt Acrylsäure als Gasphase erhalten wird. Diese Gasphase wir dann in einer Quencheinheit mit einer Flüssigkeit, vorzugsweise Wasser oder einer höher als Wasser siedenden organischen Verbindung oder einer Mischung daraus in Kontakt gebracht und mittelbar oder unmittelbar dem erfindungsgemäßen Verfahren zur Aufreinigung unterzogen. Einzelheiten zur Herstellung und zu weiteren Aufreingungsverfahren von Acrylsäure sind WO 02/055469 und den darin zitierten weiteren Nachweisen zu entnehmen, auf die hiermit als ein Teil dieser Offenbarung bezug genommen wird.

Die Erfindung wird nun anhand der Figuren näher erläutert, wobei die dargestellten Ausführungsbeispiele besonders bevorzugte Ausgestaltungen der Erfindung zeigen bzw. die Einordnung der Erfindung in das bekannte Umfeld der Destillations-Kolonnen veranschaulichen. Dabei sei darauf hingewiesen, dass die Erfindung nicht auf die dargestellten Ausführungsbeispiele begrenzt ist. Zudem werden unabhängig davon auch weitere Besonderheiten betreffend das technische Gebiet der Destillations-Kolonnen beschrieben.

Es zeigen:
- Fig. 1: schematisch und perspektivisch den Aufbau einer Kolonne mit einem Zulauf für einen polymerisationsfähigen Stoff;
- Fig. 2: schematisch eine Schnittansicht durch eine Ausgestaltung eines Trennbodens;
- Fig.3: eine schematische Ansicht auf eine weitere Ausführungsform eines Trennbodens;
- Fig. 4: eine weitere schematische Ansicht einer weiteren Ausführungsform des Trennbodens im Schnitt;
- Fig. 5: vereinfachte, schematische Darstellungen unterschiedlicher Ausführungsformen eines Strömungsgleichrichters;
- Fig. 6: eine schematische Detailansicht einer Ausführungsform einer beschichteten Bodenplatte eines Trennbodens;
- Fig.7: eine schematische Darstellung einer Anlage zur Herstellung von Acrylsäure;
- Fig.8: schematisch den Aufbau einer Versuchsanordnung zur Bestimmung der Dichteverteilung;
- Fig. 9: schematisch und perspektivisch eine gewellte Bodenplatte eines Trennbodens;
- Fig. 10: schematisch und perspektivisch eine weitere Ausführungsform des Zulaufs mit einem Strömungsmischer;
- Fig. 11: einen Teilausschnitt eines Behälters mit einer Sprühanlage im Querschnitt; und
- Fig. 12: eine Draufsicht auf die in Fig. 11 gezeigte Sprühanlage.

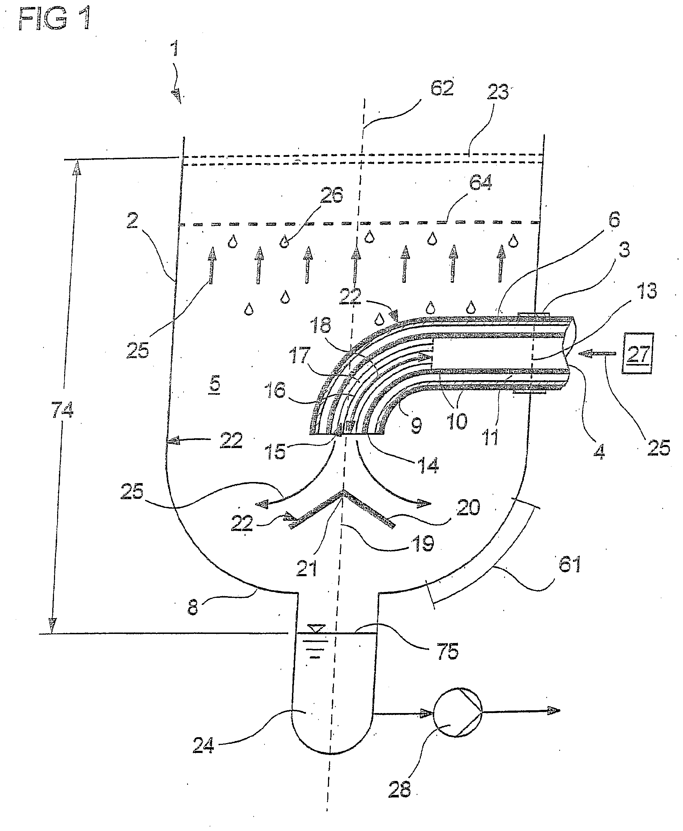

Fig. 1 zeigt schematisch und in einer Schnittansicht eine Kolonne 1 zur Destillation eines polymerisationsfähigen Stoffes, wobei diese einen Behälter 2 mit einem Unterboden 8 sowie einen Zulauf 4 für den polymerisationsfähigen Stoff umfasst. Der Zulauf 4 führt in einen Innenbereich 5 des Behälters 2. Wie im folgenden noch näher ausgeführt wird, weist die Kolonne 1 verschiedene Mittel zur gleichmäßige Verteilung des Stoffes in dem Behälter 2 auf.

Um grundsätzlich den Strömungsverlauf des polymerisationsfähigen Stoffes nachvollziehen zu können, wird zunächst dessen Weg durch die Kolonne 1 beschrieben. Üblicherweise liegt der polymerisationsfähige Stoff zunächst als Flüssigkeit vor und wird mittels eines Erhitzers 27 in einen dampfförmigen bzw. gasförmigen Zustand transformiert bzw. überhitzt. Ausgehend von dem Erhitzer 27 strömt der Stoff in Strömungsrichtung 25 durch einen Zulauf 4 in den Innenbereich 5 des Behälters 2. Beim Eintritt oder kurze Zeit nach dem Eintritt in den Innenbereich 5 strömt der teils flüssige, teils dampfförmigen Stoff weiter in Strömungsrichtung 25 (hier senkrecht nach oben anhand der Pfeile dargestellt) hin zu einem Trennboden 23, in dem eine erste Destillationsstufe verwirklicht ist. Kondensierte Bestandteile des Stoffes in Form von Tropfen 26 fallen in der Strömungsrichtung 25 entgegengesetzter Richtung wieder auf den Zulauf 4 bzw. den Unterboden 8 des Behälters 2. An der tiefsten Stelle weist der Behälter 2 ein Sammelbecken 24 auf, in dem sich das Kondensat sammelt. Dieses Sammelbecken ist mit einer Pumpe 28 verbunden, die den Abtransport des Kondensats im Sammelbecken 24 aus der Kolonne 1 erledigt.

Bei näherer Betrachtung des Zulaufs 4 ist zunächst zu erkennen, dass dieser eine Eintrittsöffnung 13 und eine Austrittsöffnung 14 hat, wobei hier die Austrittsöffnung 14 näher und im wesentlichen parallel zum Unterboden 8 des Behälters2 angeordnet ist. Der Zulauf 4 ist als separates Bauteil dargestellt, welches durch einen Anschluss 3 durch den Behälter 2 in den Innenbereich 5 hineinragt. Der Zulauf 4 weist gerade und gekrümmt verlaufende Teilbereiche auf, wobei diese hier so gestaltet sind, dass die Austrittsöffnung 14 mit ihrer Mittelachse 19 zentrisch zur Zentrumsachse 62 des Behälters 2 ausgerichtet ist. Im Inneren des Zulaufs 4 ist über eine Strecke 18 bis hin zur Austrittsöffnung 14 ein Strömungsbeeinflusser 15 angeordnet. Der Strömungsbeeinflusser 15 umfasst eine Mehrzahl von Leitblechen 16, die Kanäle 17 zur Vergleichmäßigung der Strömung des polymerisationsfäbigen Stoffs im Inneren des Zulaufs 4 gewährleisten. Zentrisch zur Mittelachse 19 bzw. der Zentrumsachse 62 ist ein kegelförmig gestalteter Strömungsverteiler 20 so angeordnet, dass seine Spitze 21 der Austrittsöffnung 14 am nächsten ist. Wie in der Fig. 1 anhand der Pfeile dargestellt ist (Strömungsrichtung 25), hat die Anordnung des Strömungsverteilers 20 im Innenbereich 5 des Behälters 2 eine Umlenkung des einströmenden Stoffes zur Folge, wobei zur Unterstützung zusätzlich der Behälter 8 so gestaltet ist, dass die Leitflächen 61 die gleichmäßige Verteilung des Stoffes in dem Behälter 2 unterstützen. Weiterhin wird mit der dargestellten Anordnung des Strömungsverteilers 20 der Vorteil erzielt, dass der einströmende Stoff nicht direkt mit dem im Sammelbecken 24 gespeicherten Kondensat vermischt wird, so dass der Strömungsverteiler 20 hier sogar noch eine Schutzfunktion hat.

Bezüglich des Zulaufs 4 ist noch festzuhalten, dass dieser mit einer Mehrzahl von Mitteln zur thermischen Isolierung gegenüber dem Innenbereich 5 versehen ist, wobei diese in einen Teilbereich 9 angeordnet sind, der sich die gesamte Außenfläche 6 des Zulaufs 4 erstreckt, welche mit dem Innenbereich 5 des Behälters 2 in Kontakt ist. Der Zulauf 4 ist als doppelwandiges Rohr ausgebildet, so dass er zwei Umhüllungen 10 aufweist, die koaxial zueinander angeordnet sind. Zwischen den beiden Umhüllungen 10 ist eine thermisch isolierte Schicht 11 als Vakuum ausgeführt, wobei die Innenfläche 12 der Umhüllung 10 verspiegelt sind.

Um zu verhindern, dass sich insbesondere flüssige Bestandteile des polymerisationsfähigen Stoffes an den den Innenraum 5 begrenzenden Flächen anlagern bzw. haften bleiben, ist die gesamte Außenfläche 6 des Zulaufs 4, die gesamte Mantelfläche bzw. Spitze 21 des Strömungsverteilers 20 und auch die Innenwandung des Behälters 2 mit einer Beschichtung 22 versehen, die eine gegenüber Stahl verbesserte Gleiteigenschaft für Flüssigkeiten aufweist.

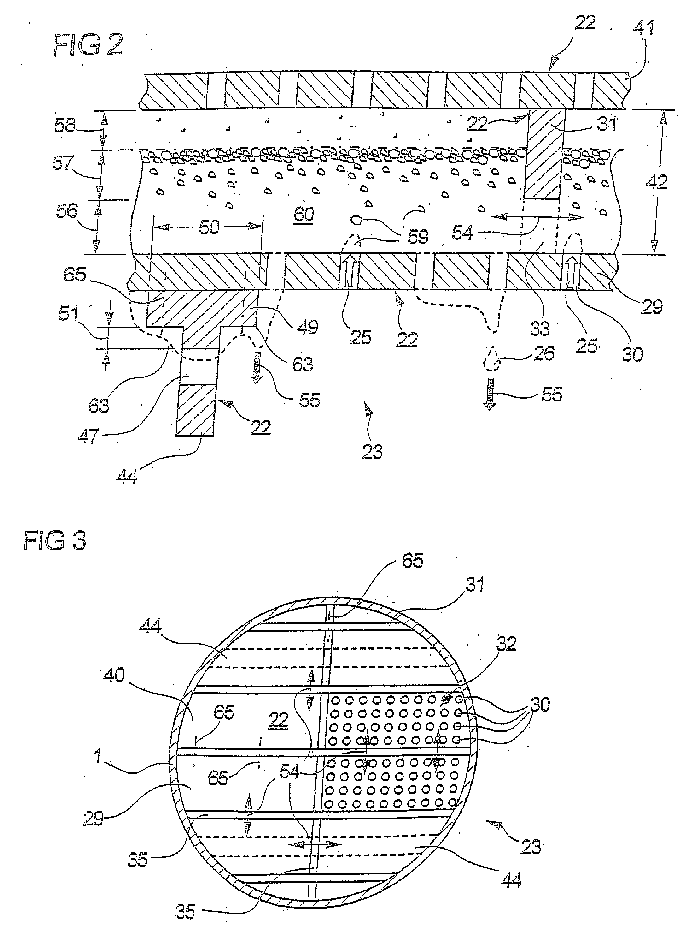

Die Fig. 2 zeigt schematisch und in einem Teilschnitt einen Trennboden 23, der eine Deckplatte 41, einen Aufsatz 31, eine Bodenplatte 29 und einen Träger 44 umfasst. Zwischen der Deckplatte 41 und der Bodenplatte 29 ist die Flüssigkeit 60 angeordnet. Durch die Öffnungen 30 der Bodenplatte 29 tritt der gasförmige, polymerisationsfähige Stoff in Strömungsrichtung 25 mit der Flüssigkeit 60 in Kontakt; wobei sich unterschiedliche Grenzschichten zwischen der Bodenplatte 29 und der Deckplatte 41 ausbilden. So lässt sich eine Flüssigkeitsschicht 56 erkennen, die im wesentlichen frei von Blasen 59 ist. Darüber ist eine Dampfblasenschicht 57 bzw. eine Art Schaumschicht angeordnet. Diese stellt praktische eine Art Grenzschicht zwischen der Flüssigkeit 60 und dem gasförmigen Volumen dar. Zwischen der Deckplatte 41 und dieser Dampfblasenschicht 57 ist weiterhin eine Tropfenschicht 58 angeordnet, wobei sich diese im wesentlichen durch einen gasförmigen Zustand des zu destillierenden Stoffes auszeichnet, der von flüssigen Tropfen 26 ausgehend von der Deckplatte 41 durchzogen ist. Während sich der gasförmige Stoff in Strömungsrichtung 25 (wie im Bild dargestellt) von unten nach oben fortbewegt, folgt die Flüssigkeit 60 der Gravitation 55 und fällt in entgegengesetzter Richtung (Gegenstrom-Prinzip) hin zum Unterboden 8 (nicht dargestellt).

Ergänzend sei an dieser Stelle darauf hinzuweisen, dass die Deckplatte 41 nicht zwingend einteilig sondern auch mehrteilig aufgebaut sein kann. Bevorzugt umfasst die Deckplatte 41 eine Vielzahl von strukturierten Blechen und/oder Kunststoff-Elementen, die zu Packungen gestapelt sind und zwischen sich (bevorzugt nicht gradlinige) Strömungspassagen bilden. Die Bleche bzw. Kunststoff-Elemente sind bevorzugt im Wesentlichen parallel zur Gravitationsrichtung angeordnet, insbesondere in einer Entfernung 42 von der Bodenplatte 29 im Bereich von 100 bis 200 mm. Die Bleche bzw. Kunststoff-Elemente sind vorteilhafterweise so bereitgestellt, dass sich eine Dicke der Deckplatte 41 bzw. der Packung von ca. 100 bis 200 mm ergibt.

Die Bodenplatte 29 weist eine Vielzahl von Öffnungen 30 auf, die mit Hilfe des Aufsatzes 31 in mehrere Gruppen 32 unterteilt werden (siehe Fig. 3). Der Aufsatz 31 ist dennoch so gestaltet, dass für das Fluid bzw. die Flüssigkeit 60 durchströmbare Durchlässe 33 gebildet sind, die in Richtung des Pfeils 54 (also im wesentlichen parallel zur Bodenplatte 29 bzw. im wesentlichen senkrecht zur Strömungsrichtung 25 des Stoffes) einen Flüssiglceitsaustausch von benachbart zueinander angeordneten Öffnungen 30 gewährleistet. Der Aufsatz 31 ist hier mit einer Beschichtung 22 versehen, die gegenüber Stahl eine verbesserte Gleiteigenschaft für Flüssigkeiten aufweist. Gleichzeitig wirkt der Aufsatz 31 als Abstandsbegrenzer bzw. Stützwand bezüglich der beiden Platten 29 und 41. Auf diese Weise ist sichergestellt, dass die Deckplatte 41 in einer vorgegebenen Entfernung 42 von der Bodenplatte 29, vorzugsweise parallel zur Bodenplatte 29, angeordnet ist. Unter Berücksichtigung der Größe bzw. Höhe 34 der Durchlässe 33 ist zu erkennen, dass diese im wesentlichen etwas kleiner als die Flüssigkeitsschicht 56 ausgebildet ist, so dass in oberliegenden, nahe der Dampfblasenschicht 57 angeordneten Bereichen der Flüssigkeitsschicht 56 eine Behinderung der Strömung stattfindet, während in Nähe der Bodenplatte 29 in Richtung des Pfeils 54 relativ unbehinderte Flüssigkeitsbewegungen ermöglicht sind. Die Deckplatte 41 kann auch als Strömungsgleichrichter 64 ausgebildet sein, insbesondere als Wabenstruktur 68 mit einer Vielzahl von für ein Fluid durchströmbaren Kanälen.

Auf der dem Absatz 31 abgewandten Seite 45 ist als Halterung ein Träger 44 vorgesehen. Der Träger 44 ist T-förmig ausgebildet und weist einen im wesentlichen parallel zur Bodenplatte 29 angeordneten Fuß 49 mit einer vorgebbaren Dimension 50 sowie ein hierzu im wesentlichen senkrechten, unteren Trägerteil auf. In dem im wesentlichen senkrecht zur Bodenplatte 29 ausgerichteten Trägerteil des T-förmigen Trägers 44 sind Aussparungen 47 vorgesehen. In dem dargestellten Ausführungsbeispiel sind die Aussparungen 47 in einem Abstand 51 kleiner 3 mm angeordnet. Dadurch werden eine Vielzahl von Abrisskanten 63 gebildet, die zur Folge haben, dass herablaufendes Fluid (als Strich-Punkt-Linie dargestellt) Tropfen 26 bildet und in Richtung der Gravitation 55 sich von der Oberfläche löst. Zur Unterstützung dieses Effektes sind sowohl die Bodenplatte 29 als auch der Träger 44 mit einer Beschichtung 22 versehen, die insbesondere Teflon umfasst.

Fig. 3 zeigt schematisch und in einer Draufsicht eine weitere Ausführungsform eines erfindungsgemäßen Trennbodens 23. Wie sich hier erkennen lässt, überspannt der dargestellte Trennboden 23 den gesamten Innenbereich 5 der Kolonne 1 bzw. des Behälters 2. Es ist jedoch auch möglich, dass eine Mehrzahl derartiger, dann vorzugsweise rechteckiger, Trennböden 23 zu einer einheitlichen Plattform zusammengesetzt sind, die letztendlich den gesamten Innenbereich 5 der Kolonne 1 überspannt. Die hier gezeigte runde Ausführungsform des Trennbodens 23 weist eine Vielzahl von Öffnungen 30 auf, wobei diese durch den Aufsatz 31 in mehrere Gruppen 32 unterteilt werden. Der Aufsatz 31 umfasst eine Mehrzahl von Stegen 35, die in regelmäßiger Anordnung miteinander fügetechnisch verbunden sind. Der so gestaltete Aufsatz bildet Sektoren 40 der Bodenplatte 29 mit jeweils einer Gruppe 32 von Öffnungen 30. Dabei ist der Aufsatz 31 so gestaltet, dass dennoch in Richtung der Pfeile 54 ein Austausch von Flüssigkeit bzw. Fluid aus benachbarten Sektoren 40 gewährleistet ist. In gestrichelter Darstellung sind zudem die Träger 44 auf der unteren Seite 45 der mit einer Beschichtung 22 versehenen Bodenplatte 29 dargestellt. Diese sind hier direkt mit der Kolonne 1 verbunden und dienen unter anderem der Stabilitätserhöhung der Bodenplatte 29.

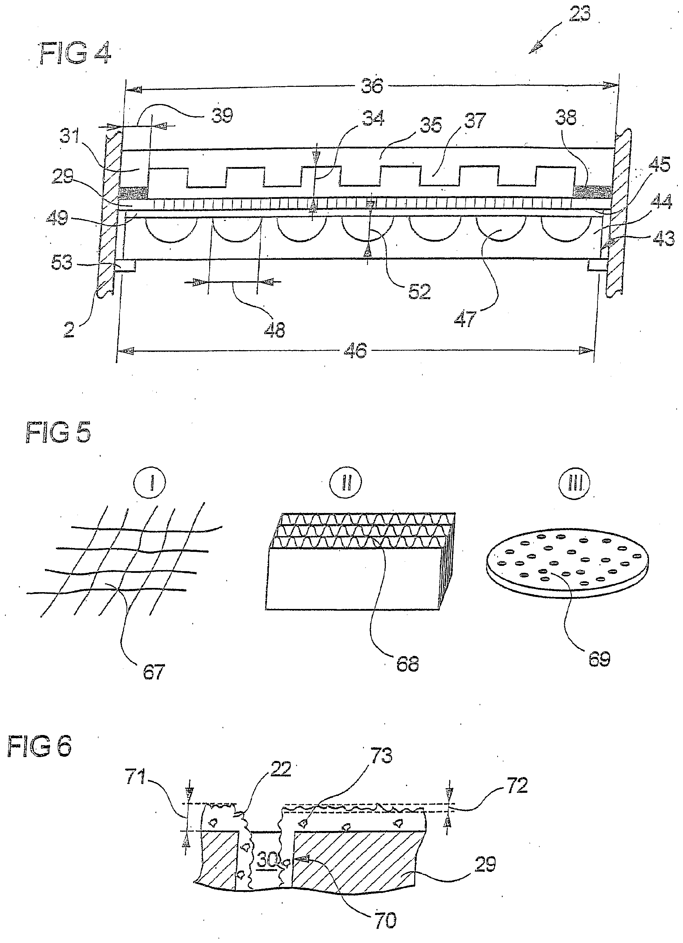

Die Fig. 4 zeigt eine weitere Schnittansicht zur Erläuterung einer Ausführungsvariante des erfindungsgemäßen Trennbodens 23. Wie sich aus Fig. 4 erkennten lässt, ist die Halterung 43 des Trennbodens 23 mit einem Träger 44 realisiert, der über Vorsprünge 53 mit dem Behälter 2 der Kolonne 1 verbunden ist, so dass eine im wesentlichen waagerechte Positionierung des Trennbodens 23 im Innenbereich 5 der Kolonne 1 sichergestellt ist. Die Vorsprünge 53 sind hier vereinfacht dargestellt. Tatsächlich können eine Mehrzahl von Justiermöglichkeiten vorgesehen sein, die eine exakte, waagerechte Ausrichtung des Trennbodens 23 im Innenraum 5 ermöglichen. Der dargestellte Träger 44 hat eine Abmessung 46 und ist T-förmig ausgeführt. Neben dem im wesentlichen senkrecht zur Bodenplatte 29 ausgerichteten Trägerteil, weist der Träger 44 einen Fuß 49 auf, der zur Auflage der Bodenplatte 29 dient. Direkt an diesem Fuß 49 schließt sich in dem senkrechten Trägerteil eine Mehrzahl von Aussparungen 47 an, wobei diese hier halbkreisartig ausgebildet sind. Die halbkreisartige Ausführung 47 ist nicht zwingend, hat aber aufgrund ihrer abgerundeten Konturen unter Steifigkeits-Aspekten Vorteile. Diese Aussparungen 47 lassen sich durch eine Ausdehnung 48 beschreiben, die im wesentlichen parallel zur Bodenplatte 29 bzw. dem Fuß 49 zu bestimmen ist. Hierzu senkrecht weisen die Aussparungen 47 jeweils eine Weite 52 auf. Bevorzugt sind die Aussparungen 47 so gestaltet, dass die Summe der Ausdehnungen 48 mindestens im Bereich von 80 % bis 30 %, vorzugsweise von 70 % bis 40 % und besonders bevorzugt von 60 % bis 65 % der Abmessung 46 liegt.

In Fig. 4 oberhalb der Bodenplatte 29 ist ein Aufsatz 31 in Form eines Steges 35 dargestellt. Der Steg 35 wird mittels Abstandshalter 38 im Randbereich der Bodenplatte 29 nahe dem Behälter 2 fixiert. Allein durch die Vorsehung derartiger Abstandshalter 38 wäre bereits ein Spalt zwischen dem Steg 35 und der Bodenplatte 29 erzeugt, der unter Umständen schon die hier beschriebene, vorteilhafte Beeinflussung der Fluidströmung zur Folge hätte. In Fig. 4 ist nun aber zur Veranschaulichung noch eine besondere Ausführungsform des Steges 35 mit einzelnen Stegen 37 dargestellt. Die Stege 37 bzw. die Abstandshalter 38 haben eine Breite 39, wobei die Summe der Breiten 39 deutlich kleiner als die Länge 36 des Steges 35 ist (beispielsweise kleiner 50%). Bezüglich der oben genannten Prozentangabe sei noch darauf hingewiesen, dass hierbei bevorzugt nur die Abstandshalter 38 bzw. Stege 37 mit ihren Breiten 39 eingehen, die in direktem Kontakt mit der Bodenplatte 29 stehen, also tatsächlich die Strömung über die gesamte Flüssigkeitsschicht behindern. Mit Hilfe der Stege 37 bzw. der Abstandshalter 38 werden demnach Durchlässe 33 gebildet, die bevorzugt ausgehend von der Bodenplatte 29 eine Höhe 34 im Bereich von 1 mm bis 100 mm, vorzugsweise von 5 mm bis 50 mm und besonders bevorzugt von 10 mm bis 30 mm haben.

Fig. 5 zeigt schematische verschiedene Ausführungsformen von Strömungsgleichrichtern 64, die zur einer verbesserten Anströmung des dampfförmigen polymerisationsfähigen Stoffes hin zu einem Trennboden 23 dienen. Grundsätzlich sei zunächst darauf hingewiesen, dass ein solcher Strömungsgleichrichter 64 die Funktion erfüllt, eine gleichmäßige Strömung des polymerisationsfahigen Stoffes hin zu dem mindestens einen Trennboden 23 zu realisieren. Gleichmäßig heißt in diesem Sinne, dass bevorzugt zumindest einer der Faktoren Strömungsgeschwindigkeit und Strömungsrichtung über den Querschnitt des Innenbereichs der Kolonne 1 nahe des Trennbodens 23 nur eine Abweichung im Bereich von weniger als 20 %, insbesondere weniger als 10 % und vorteilhafterweise weniger als 5% beträgt. Das bedeutet beispielsweise, das bei einer vorgebbaren Strömungsgeschwindigkeit des dampfförmigen Stoffes von 2 m/s bis 5 m/s [Meter pro Sekunde] höchstens Abweichungen stromaufwärts des Strömungsgleichrichters von 1 m/s [50% von 2m/s] bis 7,5 m/s [150% von 5 m/s] vorliegen. Betreffen der Strömungsrichtung 25 ist damit gemeint, dass ausgehend von einer senkrecht auf den wenigstens einen Trennboden 23 auftreffende Strömung (senkrechte Anströmrichtung) eine Toleranzweite um diese senkrechte Anströmrichtung von höchstens 180°, bevorzugt 120°, insbesondere 72°, vorteilhafterweise sogar nur 45° und besonders bevorzugt höchstens 20° vorliegt. Diesbezüglich wird insbesondere von einer symmetrischen Anordnung der Toleranzweite bezüglich der senkrechten Anströmrichtung ausgegangen.

Der Strömungsgleichrichter 64 ist vorzugsweise flächig gestaltet und im wesentlichen parallel zu dem mindestens einen Trennboden 23 ausgerichtet bzw. im Innenbereich 5 der Kolonne 1 fixiert. Der Strömungsgleichrichter 64 ist bevorzugt zumindest teilweise aus einem korrosions- und hochtemperaturfesten Material und für ein Fluid durchströmbar. Hierfür sind insbesondere Öffnungen vorgesehen, die einerseits ein Strömungsprofil, bevorzugt im Hinblick auf Geschwindigkeit und/oder Richtung, beeinflusst, andererseits aber ein Verstopfen oder Verschließen der Öffnungen verhindern. Der Strömungsgleichrichter 64 erstreckt sich bevorzugt über den gesamten Innenbereich 5 der Kolonne 1.

Dieser Strömungsgleichrichter 64 umfasst demnach zumindest eines der folgenden Elemente: wenigstens eine Gitterstruktur 67, wenigstens eine Wabenstruktur 68, wenigstens eine Lochplatte 69 oder eine sogenannte Packung. Dabei können diese Elemente direkt oder indirekt mit dem Trennboden 23 verbunden sein, insbesondere ein Teil des Trennbodens 23. Die Gitterstruktur 67 umfasst mehrere längliche, faserartige Strukturen, die chaotisch oder wie ein Gewebe miteinander verbunden sind. Als solche länglichen, faserartigen Strukturen eigenen sich beispielsweise beschichtete Metalldrähte. Die Wabenstruktur 68 kann einteilig oder aus einer Mehrzahl von Komponenten hergestellt werden. Die hier gezeigte Ausführungsform umfasst mehrere glatte und strukturierte Blechlagen, die zu einer Wabenstruktur 68 verbunden sind. Die Lochplatte 69 kann neben der dargestellten runden Ausführungsform auch rechteckig, oval, vieleckig oder in einer anderen Weise gestaltet sein. Der Anteil der Löcher beträgt bevorzugt mehr als 30% der Gesamtfläche der Lochplatte 69.

Fig. 6 zeigt ein Detail einer Ausführungsform eines Trennbodens 23 umfassend eine Bodenplatte 29 mit einer Beschichtung 22, die eine gegenüber Stahl verringerte Hafteigenschaft für Flüssigkeiten aufweist. Aus der Darstellung lässt sich erkennen, dass die Beschichtung 22 sich anhand der Kennwerte Schichtdicke 71, Oberflächenrauhigkeit 72 und Porosität 73 beschreiben lässt. Die Beschichtung 22, die bevorzugt Polytetrafluorethylen umfasst, ist auf Kotaktflächen 70 angebracht, die sonst dem direkten Kontakt mit dem polymerisationsfähigen Stoff stehen würden. Dadurch wird verhindert, dass sich der Stoff anlagert und polymerisiert.

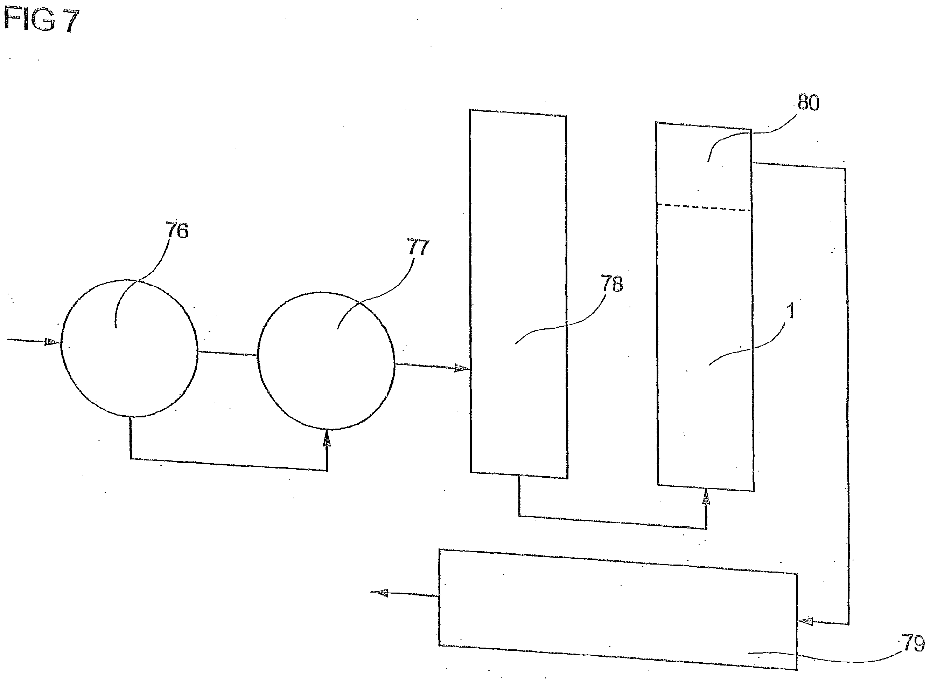

Fig. 7 zeigt schematische eine Anlage zur Herstellung von Acrylsäure die einen ersten Gasphasenoxidationsreaktor 76 zur Oxidation von Propylen zu Acrolein aufweist, der mit einem weiteren Gasphasenoxidationsreaktor 77 verbunden ist, in dem das Acrolein einer weiteren Oxidation zu Acrylsäure unterzogen wird. Das so in dem weiteren Reaktor 77 erhaltenen Acrylsäuregasgemisch wird einem Quencheinrichtung 78 eingespeist, an die sich eine erfindungsgemäße Kolonne 1 mittelbar oder unmittelbar anschließt. An die erfindungemäßen Kolonne können sich eine oder mehrere weitere Reinigungseinheiten 79 anschließen. Hierzu gehören vorzugsweise Kristallisationsvornchtungen wie Schichtkristaller, Suspensionskristaller, die mit Waschkolonnen verbunden sind, oder Extraktoren oder Azeotropdestillatoren. Die Reinigungseinheit 79 ist bevorzugt an dem Teil der Kolonne 1 angeordnet, an dem die Acrylsäure in der größten Reinheit anfällt, wobei es sich vorzugsweise um den Kolonnenkopf 80 handelt. Durch diese Gestaltung der Vorrichtung zur Herstellung von Acrylsäure wird diese in einer sehr hohen Reinheit, meist über 99,8 % erhalten. Vergleichbare Vorrichtungsgestaltungen sind ebenfalls für die anderen polymerisationsfähigen Stoffe außer Acrylsäure denkbar.

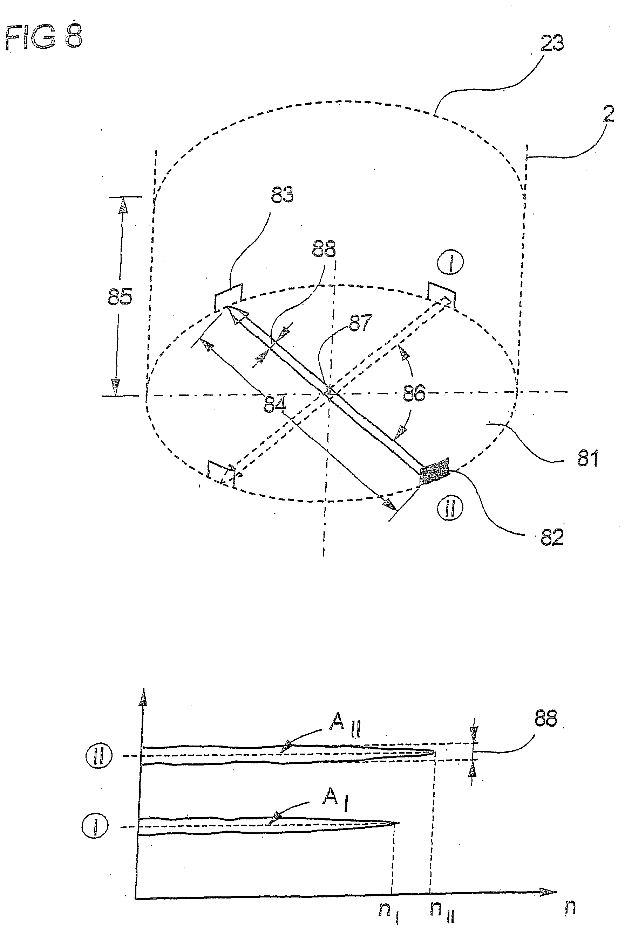

Fig. 8 zeigt schematisch den Aufbau einer Versuchsanordnung zur Bestimmung der Dichteverteilung der Stoff-Gasphase. Gestrichelt dargestellt sind der Behälter 2 sowie der erste Trennboden 23. Mit einer Strecke 85 ist unterhalb des Trennbodens 23 eine imaginäre Ebene 81 dargestellt, in der die Bestimmung der isotropen Dichteverteilung in der Stoff-Gasphase vorgenommen wird. Die Ebene 81 ist bei dem dargestellten Beispiel frei von anderen Bestandteilen des Behälters 2 oder darin angeordneten Komponenten. Auf gegenüberliegenden Bereichen der Ebene 81 sind eine Quelle 82 für eine radioaktive Strahlung sowie ein entsprechender Detektor 83 zur Bestimmung der Menge der auftreffenden radioaktiven Strahlung vorgesehen. Die Quelle 82 sendet einen Strahl durch den Mittelpunkt 87 der Eben 81, die im wesentlichen dem Querschnitt des Behälters 2 entspricht. Weiterhin ist gestrichelt eine weitere Position der Quelle und des Detektors dargestellt und mit (II) gekennzeichnet. Die Positionen (I) und (II) wurden zeitlich nacheinander und mit einer Richtungsänderung 86 versetzt zueinander eingenommen, wobei jeweils ein Mess-Prozess durchgeführt wurde. Dabei hat der Detektor 83 die auftreffende Impuls-Strahlung jeweils gezählt.

Das Mess-Ergebnis ist schematisch mittels zwei balkenähnlicher Graphen unten in Fig. 8 dargestellt. Die Messung erfolgte über einen vorgegebenen Zeitraum und mit einer gewissen Strahl-Breite 88. Der Detektor 83 hat jeweils einen Graphen generiert, der die Verteilung der Zählimpulse (n) über die Strahl-Breite 88 darstellt. Der Maximalwert der ersten Messung (Position I) und der zweiten Messung (Position II) sind in dem Diagramm mit n_{I} und n_{II} gekennzeichnet. Das Integral der Zählimpulse (n) über die Strahl-Breite 88 ist mit A_{I} bzw. A_{II} gekennzeichnet. Das Wert bzw. die Form des jeweiligen Integrals bzw. der Wert der Zählimpulse ist dabei charakteristisch für die Dichte des durchstrahlten Mediums bzw. der durchstrahlten Stoff-Gasphase. Eine balkenförmige Ausgestaltung der Integrale bzw. ein hoher Wert der Zählimpulse zeigt, dass ein sehr großer Anteil der von der Quelle 82 emittierten Strahlung den Detektor 83 erreicht hat. Umgekehrt deutet ein sehr geringer Wert der Zählimpulse bzw. eine spitze Ausprägung des Graphen auf ein dichteres Medium, welches zumindest teilweise nicht von der radioaktiven Strahlung durchdrungen wird.

Wird eine solche Messung an mehreren Positionen (I, II,...) bei einer zuvor beschriebenen, insbesondere erfindungsgemäßen, Vorrichtung durchgeführt, wird eine maximale Abweichung der isotropen Dichte innerhalb der Ebene 81 zwischen dem Zulauf 4 und dem ersten Trennbodens 23 höchstens 15% betragen. Bei dem dargestellten Ausführungsbeispiel heißt das, dass der Wert von n_{I} mindestens 70 % von n₂ beträgt. Aufgrund der Tatsache, dass die Anzahl der detektierten Impulse charakteristisch für die Dichte der durchstrahlten Stoff-Gasphase ist, kann dieser Kennwert als Maß für die Dichte herangezogen werden. Damit lässt sich also feststellen, dass eine isotrope Dichtenverteilung gemäß der Erfindung vorliegt.

Figur 9 zeigt schematisch ein Detail eine besondere Ausgestaltung einer gewellten Bodenplatte 29 eines Trennbodens 23. Eine solche Bodenplatte 29, insbesondere mit den nachstehenden Eigenschaften, hat eine Vielzahl von Löchern 30 und ist in Kombination mit den hier beschriebenen Ausführungsvarianten aber auch unabhängig davon besonders vorteilhaft. Der Vorteil einer gewellten Bodenplatte 29 ist, dass an der Unterseite der haftende Flüssigkeitstropfen 26 hin zu den Wellentälern 90 ablaufen und sich dort lokal miteinander vermengen. Dies reduziert weiter die Gefahr einer Polymerisation. Gleichzeitig führt diese Ansammlung von Flüssigkeit dazu, dass sich diese letztlich auch ablöst. Bei einer gewellten Ausgestaltung der Bodenplatte 29 kann auf Aufsätze 31, wie sie beispielsweise in den Figuren 2 und 3 gezeigt sind, verzichtet werden, da die Wellenform selbst eine Art Unterteilung bereitstellt, die ein ungewünschtes Hin- und Herströmen der Flüssigkeit verhindert. Bevorzugt werden mehrere oder sogar alle Trennböden 23 einer Kolonne 1 mit solchen gewellten Bodenplatten 29 ausgestattet. Bevorzugt sind dabei benachbart zueinander positionierte Bodenplatten 29 im Hinblick auf die Ausrichtung bzw. Orientierung der Wellenform versetzt zueinander angeordnet, insbesondere in der Form, dass die Wellenberge 89 bzw. Wellentäler 90 der Bodenplatten 29 einen Winkel von ca. 90° bilden.

Besonders bevorzugt ist die Ausgestaltung der Bodenplatte 29 mit einer Wellhöhe 92 im Bereich von 0,5 bis 5,0 cm; insbesondere in einem Bereich von 1,2 bis 1,7 cm. Mit Wellhöhe 92 ist in diesem Zusammenhang der mittlere senkrechte Abstand eines Wellenberges 89 und eines Wellentales 90 zueinander gemeint. Ein Wellenberg 89 liegt dabei in einem horizontalen Abstand von seinem benachbarten Wellental 90 (entspricht der Welllänge 91) von etwa 3,0 cm bis 10 cm, insbesondere liegt die Welllänge 91 in einen Bereich von 4,0 cm bis 6,0 cm.

Eine weitere Verbesserung im Hinblick auf die Reduzierung der Polymerisationsneigung kann durch spezielle Ausgestaltungen von mit dem polymerisationsfähigen Stoff in Kontakt kommenden Flächen der Kolonne 1 erreicht werden. Dies trifft in besonderem Maße für zumindest einem Teil des Trennbodens 23, des Strömungsverteilers 20, des Zulaufes 4, des Strömungsgleichrichters 64 oder des Behälters 2 zu.

Gemäß einer Variante ist zumindest eine dieser vorstehend genannten Flächen bzw. deren Beschichtung wenigstens teilweise mit einem besonders geringen Mittenrauhwert (Rₐ) versehen. Der Mittenrauhwert ist der arithmetische Mittelwert (über einen Bezugsweg 95) der absoluten Beträge der Strecken 96 des Ist-Profils 94 von der Mittellage 93. Hier liegt der Mittenrauwert bevorzugt in einem Bereich kleiner 2,0 µm (Mikrometer), insbesondere in einem Bereich von 0,5 µm bis 1,0 µm. Bei einem solchen Mittenrauwert wird die Haftneigung der Flüssigkeit bezogen auf die von ihr benetzte Oberfläche reduziert, so dass diese schneller abläuft bzw. abtropft. In Fig. 9 ist ein solcher Mittenrauhwert mit Bezug auf die Oberfläche der Bodenplatte 29 beispielhaft und veranschaulichend dargestellt.

Außerdem besteht auch die Möglichkeit (alternativ oder kumulativ), zumindest eine dieser vorstehend genannten Flächen wenigstens teilweise mit einer so genannten selbstreinigenden Oberfläche bzw. Beschichtung zu versehen. Bevorzugt hat diese selbstreinigende Oberfläche eine künstliche, zumindest teilweise hydrophobe Oberflächenstruktur aus Erhebungen und Vertiefungen, wobei die Erhebungen und Vertiefungen durch mittels eines Trägers auf der Oberfläche fixierten Partikel gebildet werden. Vorteilhafterweise zeichnet sich dadurch aus, dass die Partikel eine zerklüftete Struktur mit Erhebungen und/oder Vertiefungen im Nanometerbereich aufweisen (Nanostruktur 97 ist schematisch in Figur 9 dargestellt). Vorzugsweise weisen die Erhöhungen im Mittel eine Höhe von 20 bis 500 nm (Nanometer), besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Die zerklüfteten Strukturen mit Erhebungen und/oder Vertiefungen im Nanometerbereich können z.B. über Hohlräume, Poren, Riefen, Spitzen und/oder Zacken gebildet werden. Die Partikel selbst weisen eine durchschnittliche Größe von kleiner 50 µm (Mikrometer), vorzugsweise von kleiner 30 µm und ganz besonders bevorzugt von kleiner 20 µm auf. Bevorzugt weisen die Partikel eine BET-Oberfläche von 50 bis 600 m²/g (Quadratmeter pro Gramm) auf. Ganz besonders bevorzugt weisen die Partikel eine BET-Oberfläche von 50 bis 200 m²/g auf. Bei der so genannten "BET-Oberfläche" wird zur Bestimmung der spezifischen Oberfläche auf das weit bekannte Verfahren von BRUNAUER, EMMET und TELLER zurückgegriffen.

Als strukturbildende Partikel können verschiedenste Verbindungen aus vielen Bereichen der Chemie eingesetzt werden. Hierzu sind anorganische Partikel bevorzugt. Vorzugsweise weisen die Partikel zumindest ein Material, ausgewählt aus Silikaten, dotierten Silikaten, Mineralien, Metalloxiden, Kieselsäuren, Polymeren und mit Kieselsäure beschichteten Metallpulvern, auf. Ganz besonders bevorzugt weisen die Partikel pyrogene Kieselsäuren oder Fällungskieselsäuren, insbesondere Aerosile, Al₂O₃, SiO₂, TiO₂, ZrO₂, mit Aerosil R974 ummanteltes Zinkpulver, vorzugsweise mit einer Teilchengröße von 1 µm (Mikrometer) oder pulverförmige Polymere, wie z.B. kryoges, gemahlenes oder sprühgetrocknetes Polytetrafluorethylen (PTFE) oder perfluorierte Copolymere bzw. Copolymere mit Tetrafluorethylen, auf. Derartige Partikel bzw. Beschichtungen zur Generierung selbstreinigender Oberflächen sind beispielsweise über die DEGUSSA AG zu beziehen.

### Messmethoden

Die isotrope Dichte ("richtungsunabhängige" Dichteverteilung) der Stoff-Gasphase bzw. die Abweichung wird zum Beispiel mit einem Verfahren der Firma Ingenieurbüro Bulander & Esper GmbH in Zwingenberg, Deutschland, bestimmt. Dabei wird mittels einer radioaktiven Quelle ein gerichteter Strahl (mit einer vorgegebenen Breite, z.B. 5 cm) hin zu einem Detektor ausgesendet. Dabei befinden sich Quelle und Detektor auf gegenüberliegenden Seiten der Kolonne, so dass sich der Strahl im wesentlichen horizontal durch die Kolonne hindurch erstreckt. Als Quellen werden beispielsweise Kobalt (Co 60) und Cäsium (Cs 137) mit einer Aktivität von 0,3 bis 3,7 GBq eingesetzt.

Der während des Betriebes der Kolonne emittierte Strahl wird vorteilhafterweise mit einem Szintillationsdetektor in Form von Impulsen pro Zeiteinheit gemessen und an eine Auswerte- bzw. Anzeigeeinrichtung weitergeleitet. Grundsätzlich können auch eine Mehrzahl von Detektoren bzw. Quellen vorgesehen sein, die ggf. über den Umfang der Kolonne verteilt angeordnet sind. Letztere Anordnung hat den Vorteil, dass für Vergleichsmessungen in unterschiedliche Richtungen derselbe Versuchsaufbau beibehalten werden kann und nur andere Quellen bzw. Detektoren in Einsatz gelangen, so dass Messungenauigkeiten infolge unsachgemäßer Anbringung vermieden werden können.

Betreffend den Aufbau der Versuchsanordnung wird ergänzend auf die Erläuterungen zu Fig. 8 Bezug genommen.

Während ein solcher radioaktiver Strahl für einen vorgebbaren Zeitraum durch die Stoff-Gasphase hindurch emittiert wird, erkennt ein Zähler des Detektors die auftreffende Strahlung und zählt die Impulse. Die Anzahl der Impulse pro Zeiteinheit ist ein Maß für die Dichte der zwischen Quelle und Detektor befindlichen Materie. Ein hoher Wert charakterisiert eine geringe Dichte, da ein großer Anteil der emittierten Strahlung den Detektor erreicht hat. Dementsprechend ist ein niedriger Wert der gezählten Impulse charakteristisch für eine größere Dichte.

Eine gleichmäßige Strömung der Stoff-Gasphase lässt sich beispielsweise daran erkennen, das in einem Querschnitt die flüssigen und gasförmigen Bestandteile gleichmäßig verteilt sind. Daran ist zu erkennen, dass die Trennböden lokal verstopft sind (so dass dort nur ein geringer Flüssigkeitsanteil in der Stoff-Gasphase vorliegt und somit eine geringere Dichte) oder beispielsweise Bereiche geringer Gasströmungen vorliegen (wo dann aufgrund des geringeren Gegendruckes ein erhöhter Flüssigkeitsstrom und somit eine erhöhte Dichte festzustellen ist).

Zur Feststellung der Isotropie wird nun vorgeschlagen, zunächst eine Messung in einer ersten Richtung in einer Ebene unterhalb des ersten Trennbodens vorzunehmen und über einen vorgegebenen Zeitraum (t; z.B. 5 min) die detektierte Strahlung zu erfassen (n). Um den Einfluss von Betriebsschwankungen der Kolonne zu reduzieren, kann diese Messung auch mehrmals durchgeführt werden, wobei über jeweils den Zeitraum (t) ein Wert (nᵢ) erfasst wird. Anschließend wird ein Mittelwert (N) gebildet und als Referenz für die Isotropie herangezogen. Hierzu sei ergänzend erläutert, das der radioaktive Strahl mit einer bestimmten Breite (z.B. 5 cm) emittiert wird, und der Detektor ggf. eine Auflösung hat, die eine Differenzierung der Messwerte über diese Breite ermöglicht. Dann kann wiederum der Mittelwert oder die Fläche unter dem Graphen (das Integral) als Referenz herangezogen werden, welcher die Impulsrate über die Breite darstellt.

Nachdem nun ein charakteristischer Wert bzw. ein charakteristisches Integral für die detektierte Strahlung erfasst ist, wird nun die vorstehend beschriebene Prozedur auf gleicher Ebene aber in einer davon abweichenden Richtung wiederholt. Die beiden Richtungen schließen dabei eine Winkel ein, der bevorzugt größer als 30° ist, insbesondere sogar größer 40°. Somit sind zumindest 2 solcher Messungen aus verschiedenen Richtungen vorzunehmen, insbesondere sogar wenigstens 3.

Grundsätzlich sollte dabei eine Richtung entlang des Durchmessers der Kolonne gewählt werden, um sicherzustellen, dass die freie Strahllänge durch die Stoff-Gasphase gleich lang ist und sich somit die Werte für die detektierte Strahlung miteinander vergleichen lassen. Dies ist dann deshalb möglich, weil die Strahlung das gleiche Volumen der Stoff-Gasphase durchschritten hat. Natürlich ist auch möglich, eine hiervon abweichende Strahlstrecke zu wählen, es sollte nur sichergestellt sein, dass diese bei jeder Messung die gleiche Länge hat.

Die Ebene kann grundsätzlich beliebig in der Kolonne angeordnet sein und ist bevorzugt im wesentlichen parallel zu mindestens einem Trennboden auszurichten. Für die Überprüfung der Gleichmäßigkeit der Strömung können solche Richtstrahlungen durch einen Trennboden, das Destillat oder durch die Stoff-Gasphase hindurch vorgenommen werden. Zur Charakterisierung des Anströmverhaltens des ersten Trennbodens ist die Ebene bevorzugt in einem Bereich kleiner 200 mm unterhalb des ersten Trennbodens zu wählen. Insbesondere liegt die Ebene in einem Bereich von 100 mm bis 10 mm unterhalb des ersten Trennbodens.

Eine Isotropie der Dichte liegt im Sinne der Erfindung insbesondere dann vor, wenn die Abweichung der erfassten Messwerte (n bzw. N) maximal 15% beträgt. Zur Bestimmung der Abweichung wird ein arithmetischen Mittelwert (M) der Messwerte bestimmt. Er ist bei einer gegebenen Richtungsmessungsanzahl (X) definiert als Quotient aus der Summe der Messwerte je Richtung (n_{X} bzw. N_{X}) und der Anzahl der Messwerte (X). Mit einer maximalen Abweichung von beispielsweise 5 % ist gemeint, dass der höchste Messwert der Impulsrate und der niedrigste Messwert in einem Bereich von 0,95 M bis 1,05 M liegen. Dabei ist bei der hier angegebenen Abweichung bevorzugt schon die Messabweichung infolge kosmischer Umgebungsstrahlung (etwa +/- 50 Zählimpulse bei üblicherweise 3 Sekunden Messdauer und einem Messband von ca. 50 mm) berücksichtigt.

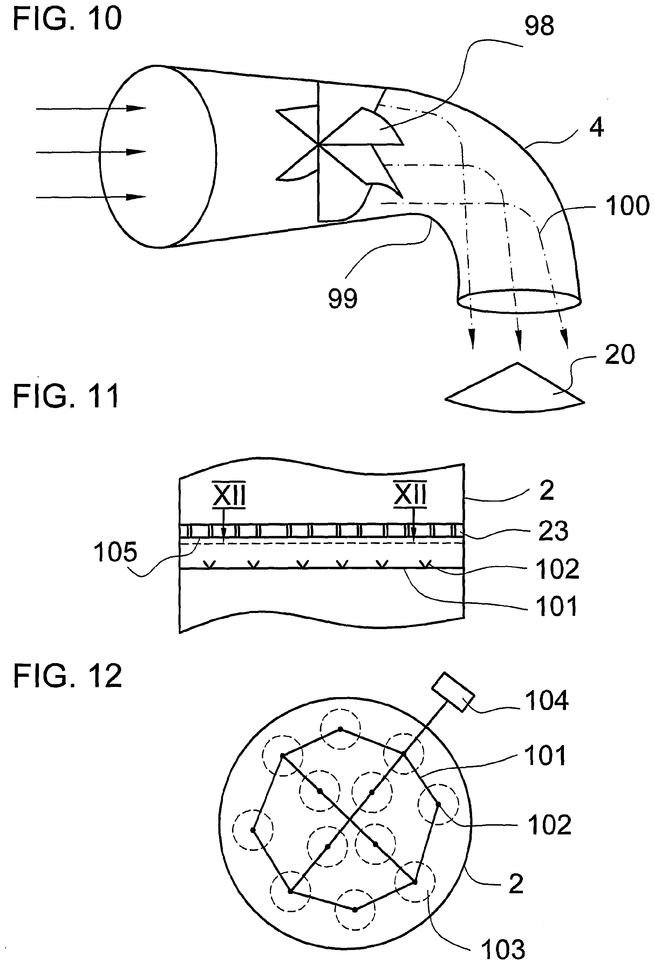

Fig. 10 zeigt schematisch und perspektivisch die erfindungsgemässe Ausführungsform des Zulaufs 4 mit einem Strömungsmischer 98 als besondere Ausgestaltung eines Strömungsbeeinflussers. Der dargestellte Zulauf 4 weist eine Krümmung 99 auf, in der der polymerisationsfähige Stoff umgelenkt wird. Würde der polymerisationsfähige Stoff ohne einen Strömungsbeeinflusser frei durch einen solchen Zulauf 4 strömen, käme es aufgrund der Krümmung 99 zu einer ungleichmäßige Geschwindigkeitsverteilung der Strömung über den Querschnitt des Zulaufs 4. Grund hierfür sind Strömungswirbel und Rüclcströmungen im Bereich der Krümmung 99. Um dies zu vermeiden ist es auch möglich, einen Strömungsmischer 98 stromaufwärts in der Nähe (bevorzugt unmittelbar vor) der Krümmung 99 vorzusehen. Ein solcher Strömungsmischer 98 unterteilt den anströmenden polymerisationsfähigen Stoff in mehrere Strömungsfäden 100 und lenkt diese so ab, dass sie im wesentlichen die gleiche Wegstrecke durch die Krümmung 99 hindurch zurücklegen. Dabei wird der polymerisationsfähige Stoff bevorzugt zumindest teilweise in Rotation versetzt. Damit kann eine einheitliche Strömung ohne Pulsationen und Rückvermischungen generiert werden, so dass der Querschnitt des Zulaufs 4 auch nach der Krümmung 99 gleichmäßig bestömt wird und der polymerisationsfähige Stoff gleichmäßig verteilt beispielsweise auf den Strömungsverteiler 20 auftrifft. Es sei schließlich noch darauf hingewiesen, dass die Bereitstellung eines solchen Strömungsbeeinflussers bzw. Strömungsmischers 98 an mehreren Krümmungen 99 des Zulaufs 4 erfolgen kann.

Fig. 11 veranschaulicht einen Teilausschnitt eines Behälters 2 mit einer Sprühanlage 101 im Querschnitt, wobei in Fig. 12 eine Draufsicht auf die in Fig. 11 gezeigte Sprühanlage 101 gezeigt ist. Der Behälter 2 ist mit einem Trennboden 23 ausgeführt, dessen Unterseite 105 (insbesondere während des Betriebes der Kolonne 1) mit einer Sprühanlage 101 gereinigt wird. Eine solche Sprühanlage 101 ist bevorzugt zumindest für den untersten Trennboden 23 des Behälters 2 vorgesehen, wenn dieser eine Mehrzahl von übereinander angeordneten Trennböden 23 aufweist. Durch diesen Trennboden 23 strömt eine Flüssigkeit des polymerisationsfähigen Stoffes mit einer bestimmten Zusammensetzung, die anschließend beispielsweise in einem Sammelbecken 24 des Behälters 2 aufgefangen wird. Vorteilhafterweise wird nun vorgeschlagen, diese Flüssigkeit über eine Liefervorrichtung 104 der Sprühanlage 101 zur Verfügung zu stellen und damit die Unterseite des Trennbodens 23 zu reinigen. Die Verwendung dieser Flüssigkeit hat den Vorteil, dass keine wesentliche Beeinflussung der Destillation im untersten Trennboden 23 stattfindet. Mit dieser Sprühanlage 101 werden an der Unterseite 105 des Trennbodens 23 haftende (ggf. schon teilweise polymerisierte) Bestandteile des polymerisationsfahigen Stoffes wirksam entfernt.

Die Sprühanlage 101 selbst kann mit einer Mehrzahl von Düsen 102 ausgeführt sein. Diese sind so ausgeführt, dass eine im wesentlichen gleichmäßige Reinigung des Trennbodens 23 über dessen gesamten Querschnitt erfolgen kann. Dabei kann die Anordnung und/oder die Art der Düsen entsprechend ausgewählt sein. Die Fig. 12 zeigt schematisch eine mögliche Ausführungsform der Sprühanlage 101 mit gleichmäßig verteilten Düsen 102, die einen im wesentlichen gleichartigen Sprühbereich 103 aufweisen. Eine solche Ausgestaltung der Sprühanlage 101 ist technisch und wirtschaftliche einfach, allerdings nicht zwingend erforderlich. Die Düsen 102 sind hier so angeordnet, dass sich die Sprühbereiche 103 im wesentlichen nicht überlagern, aber auch dies ist nicht zwingend. Als Düsen 102 kommen sowohl einfache Öffnungen in der Sprühanlage 101 als auch separate Düsenbauteile (bevorzugt) in Betracht.

### Bezugszeichenliste

- 1: Kolonne
- 2: Behälter
- 3: Anschluss
- 4: Zulauf
- 5: Innenbereich
- 6: Außenfläche
- 7: Teilabschnitt
- 8: Unterboden
- 9: Teilbereich
- 10: Umhüllung
- 11: Schicht
- 12: Innenfläche
- 13: Eintrittsöffnung
- 14: Austrittsöffnung
- 15: Strömungsbeeinflusser
- 16: Leitblech
- 17: Kanal
- 18: Strecke
- 19: Mittelachse
- 20: Strömungsverteiler
- 21: Spitze
- 22: Beschichtung
- 23: Trennboden
- 24: Sammelbecken
- 25: Strömungsrichtung
- 26: Tropfen
- 27: Erhitzer
- 28: Pumpe
- 29: Bodenplatte
- 30: Öffnung
- 31: Aufsatz
- 32: Gruppe
- 33: Durchlass
- 34: Höhe
- 35: Steg
- 36: Länge
- 37: Strebe
- 38: Abstandshalter
- 39: Breite
- 40: Sektor
- 41: Deckplatte
- 42: Entfernung
- 43: Halterung
- 44: Träger
- 45: Seite
- 46: Abmessung
- 47: Aussparung
- 48: Ausdehnung
- 49: Fuß
- 50: Dimension
- 51: Abstand
- 52: Weite
- 53: Vorsprung
- 54: Pfeil
- 55: Gravitation
- 56: Flüssigkeitsschicht
- 57: Dampfblasenschicht
- 58: Tropfenschicht
- 59: Blase
- 60: Flüssigkeit
- 61: Leitfläche
- 62: Zentrumsachse
- 63: Abrisskante
- 64: Strömungsgleichrichter
- 65: Verbindungselement
- 66: Mantelfläche
- 67: Gitterstruktur
- 68: Wabenstruktur
- 69: Lochplatte
- 70: Kontaktfläche
- 71: Schichtdicke
- 72: Oberflächenrauhigkeit
- 73: Porosität
- 74: Distanz
- 75: Flüssigkeitsspiegel
- 76: ersten Gasphasenoxidationsreaktor
- 77: weiteren Gasphasenoxidationsreaktor
- 78: Quencheinrichtung
- 79: Reinigungseinheiten
- 80: Kolonnenkopf
- 81: Ebene
- 82: Quelle
- 83: Detektor
- 84: Weg
- 85: Strecke
- 86: Richtungsänderung
- 87: Mittelpunkt
- 88: Strahl-Breite
- 89: Wellenberg
- 90: Wellental
- 91: Welllänge
- 92: Wellhöhe
- 93: Mittellage
- 94: Ist-Profil
- 95: Bezugsweg
- 96: Strecke
- 97: Nanostruktur
- 98: Strömungsmischer
- 99: Krümmung
- 100: Strömungsfaden
- 101: Sprühanlage
- 102: Düse
- 103: Sprühbereich
- 104: Liefervorrichtung

## Patentansprüche

1. Kolonne (1) zur Destillation eines polymerisationsfähigen Stoffes, wobei die Kolonne (1) einen Behälter (2) mit einem Unterboden (8) sowie mindestens einen Zulauf (4) für den polymerisationsfähigen Stoff umfasst, der in einen Innenbereich (5) der Kolonne (1) führt, **dadurch gekennzeichnet, dass** Mittel zur gleichmäßigen Verteilung des Stoffes in dem Behälter (2) vorgesehen sind., wobei der mindestens eine Zulauf (4) eine Austrittsöffnung (14) hat, wobei über eine Strecke (18) des mindestens einen Zulaufs (4), bevorzugt zumindest nahe der Austrittsöffnung (14), mindestens ein Strömungsbeeinflusser (15) angeordnet ist und wobei der mindestens eine Strömungsbeeinflusser (15) wenigstens ein Leitblech (16) aufweist, so dass eine Mehrzahl von Kanälen (17) über die Strecke (18) des Zulaufs (4) gebildet ist und wobei der mindestens eine Zulauf (4) eine Krümmung (99) aufweist und der mindestens eine Strömungsbeeinflusser (15) ein Strömungsmischer (98) ist, der stromaufwärts in der Nähe der Krümmung (99) vorgesehen ist, den anströmenden polymerisationsfähigen Stoff in mehrere Strömungsfäden (100) unterteilt und diese so ablenkt, dass sie im Wesentlichen die gleiche Wegstrecke durch die Krümmung (99) hindurch zurücklegen.

2. Kolonne (1) nach Anspruch 1, wobei der mindestens eine Zulauf (4) eine Eintrittsöffnung (13) und eine Austrittsöffnung (14) hat, wobei die Austrittsöffnung (14) näher zum Unterboden (8) der Kolonne (1) angeordnet ist als die Eintrittsöffnung (13) und der mindestens eine Zulauf (4) eine Austrittsöffnung (14) hat, die im wesentlichen parallel zum Unterboden (8) angeordnet ist.

3. Kolonne (1) nach einem der vorhergehenden Ansprüche, wobei der mindestens eine Zulauf (4) eine Austrittsöffnung (14) hat, wobei im Innenbereich (5) der Kolonne (1), insbesondere zentrisch zu einer Mittelachse (19) der Austrittsöffnung (14), mindestens ein Strömungsverteiler (20) angeordnet ist.

4. Kolonne (1) nach Anspruch 3, wobei der mindestens eine Strömungsverteiler (20) mindestens teilweise kegelförmig gestaltet ist, wobei eine Spitze (21) des Strömungsverteilers (20) auf der Mittelachse (19) der Austrittsöffnung (14) so angeordnet ist, dass die Spitze (21) der Austrittsöffnung (14) am nächsten ist.

5. Kolonne (1) nach einem der vorhergehenden Ansprüche, wobei der Behälter (2) wenigstens eine Leitfläche (61) umfasst.

6. Kolonne (1) nach einem der vorhergehenden Ansprüche, wobei der mindestens eine Zulauf (4) Mittel zur thermischen Isolierung gegenüber dem Innenbereich (5) aufweist.

7. Kolonne (1) nach Anspruch 6, wobei die Mittel zur thermischen Isolierung auf zumindest einem Teilbereich (9) des Zulaufs (4) angeordnet sind, der sich in den Innenbereich (5) der Kolonne (1) hinein erstreckt.

8. Kolonne (1) nach Anspruch 6 oder 7, wobei die Mittel zur thermischen Isolierung durch einen Zulauf (4) aus zumindest teilweise thermisch isolierendem Material gebildet sind.

9. Kolonne (1) nach einem der Ansprüche 6 bis 8, wobei der mindestens eine Zulauf (4) mehrere Umhüllungen (10) hat, wobei bevorzugt eine thermisch isolierende Schicht (11) zwischen wenigstens zwei Umhüllungen (10) vorgesehen ist.

10. Kolonne (1) nach Anspruch 9, wobei die thermisch isolierende Schicht (11) ein Vakuum ist, wobei vorzugsweise wenigstens eine Innenfläche (12) der mehreren Umhüllungen (10) verspiegelt ist.

11. Kolonne (1) nach einem der vorhergehenden Ansprüche, wobei der mindestens eine Zulauf (4) zumindest in einem Teilabschnitt (7) eine Beschichtung (22) aufweist, die eine gegenüber Stahl verringerte Hafteigenschaft für Flüssigkeiten aufweist.

12. Kolonne (1) nach einem der vorhergehenden Ansprüche, wobei der mindestens eine Zulauf (4) zwischen dem Unterboden (8) und einem Trennboden (23) angeordnet ist.

13. Kolonne (1) nach einem der vorhergehenden Ansprüche, wobei der Behälter (2) eine Mehrzahl von Trennböden (23) aufweist und mindestens eine Sprühanlage (101) vorgesehen ist, mit der eine Unterseite (105) wenigstens eines Trennbodens (23) mit dem polymerisationsfähigen Stoff besprühbar ist.

14. Verfahren zur Aufreinigung eines polymerisationsfähigen Stoffes, wobei der polymerisationsfähige Stoff in einer in einem der Ansprüche 1 bis 16 definierten Kolonne (1) durch den Zulauf (4) als eine Stoff-Flüssigkeit eingebracht und in dem Innenbereich (5) in eine Stoff-Gasphase überführt wird.

15. Verfahren nach Anspruch 14 wobei die Stoff-Gasphase einen oberhalb des Zulaufs (4) angeordneten ersten Trennboden (23) mit einer isotropen Dichte anströmt, wobei innerhalb einer Ebene zwischen dem Zulauf (4) und dem ersten Trennbodens (23) die maximale Abweichung um einen Mittelwert der isotropen Dichte höchstens 15% beträgt.

16. Verfahren nach Anspruch 14 oder 15 wobei der polymerisationsfähige Stoff (Meth)Acrylsäure ist.

17. Verfahren nach einem der Ansprüche 14 bis 16 wobei im Innenbereich ein Unterdruck herrscht.

18. Verfahren nach einem der Ansprüche 14 bis 16 wobei die Stoff-Flüssigkeit überhitzt ist.

19. Verfahren zur Herstellung eines polymerisationsfähigen Stoffs, wobei der polymerisationsfähige Stoff aus mindestens einem Edukt in einem Reaktor synthetisiert und nachfolgend einem Verfahren zum Aufreinigen, wie einem der Ansprüche 14 bis 18 definiert, unterzogen wird

## Claims

1. Column (1) for the distillation of a polymerizable substance, wherein the column (1) comprises a container (2) having an underbody (8) and at least one feed (4) for the polymerizable substance which leads into an inner region (5) of the column (1), **characterized in that** means for uniform distribution of the substance in the container (2) are provided, wherein the at least one feed (4) has an exit orifice (14), wherein via a sector (18) of the at least one feed (4), preferably at least close to the exit orifice (14), at least one flow influencer (15) is arranged and wherein the at least one flow influencer (15) comprises at least one baffle (16) so that a plurality of channels (17) is formed over the sector (18) of the feed (4) and wherein the at least one feed (4) comprises a bend (99) and the at least one flow influencer (15) is a flow mixer (98) which is provided upstream close to the bend (99), divides the inflowing polymerizable substance into a plurality of flow filaments (100) and deflects these such that they travel essentially the same path length through the bend (99).

2. Column (1) according to Claim 1, wherein the at least one feed (4) has an entry orifice (13) and an exit orifice (14), wherein the exit orifice (14) is arranged closer to the underbody (8) of the column (1) than the entry orifice (13) and the at least one feed (4) has an exit orifice (14) arranged essentially parallel to the underbody (8).

3. Column (1) according to any of the preceding claims, wherein the at least one feed (4) has an exit orifice (14), wherein in the inner region (5) of the column (1), in particular centrically to a central axis (19) of the exit orifice (14), at least one flow distributor (20) is arranged.

4. Column (1) according to Claim 3, wherein the at least one flow distributor (20) is at least partly conical, wherein a tip (21) of the flow distributor (20) is arranged on the central axis (19) of the exit orifice (14) such that the tip (21) is closest to the exit orifice (14).

5. Column (1) according to any of the preceding claims, wherein the container (2) comprises at least one conductive surface (61).

6. Column (1) according to any of the preceding claims, wherein the at least one feed (4) comprises means for thermal insulation with respect to the inner region (5).

7. Column (1) according to Claim 6, wherein the means for thermal insulation are arranged on at least a subregion (9) of the feed (4) which extends into the inner region (5) of the column (1).

8. Column (1) according to Claim 6 or 7, wherein the means for thermal insulation are formed by a feed (4) made of at least partially thermally insulating material.

9. Column (1) according to any of Claims 6 to 8, wherein the at least one feed (4) has a plurality of encasements (10), wherein preferably a thermally insulating layer (11) is provided between at least two encasements (10).

10. Column (1) according to Claim 9, wherein the thermally insulating layer (11) is a vacuum, wherein preferably at least one inner surface (12) of the plurality of encasements (10) is mirrored.

11. Column (1) according to any of the preceding claims, wherein the at least one feed (4) comprises at least in a subsection (7) a coating (22) having a reduced adhesion towards liquids compared to steel.

12. Column (1) according to any of the preceding claims, wherein the at least one feed (4) is arranged between the underbody (8) and a separating tray (23).

13. Column (1) according to any of the preceding claims, wherein the container (2) comprises a plurality of separating trays (23) and at least one spraying apparatus (101) is provided with which an underside (105) of at least one separating tray (23) is sprayable with the polymerizable substance.

14. Process for purification of a polymerizable substance, wherein the polymerizable substance is introduced as a liquid substance into a column (1) defined in any of Claims 1 to 16 through the feed (4) and is converted into a gas-phase substance in the inner region (5).

15. Process according to Claim 14, wherein the gas-phase substance inflows at a first separating tray (23) arranged above the feed (4) with an isotropic density, wherein within a plane between the feed (4) and the first separating tray (23) the maximum deviation from an average isotropic density is not more than 15%.

16. Process according to Claim 14 or 15, wherein the polymerizable substance is (meth)acrylic acid.

17. Process according to any of Claims 14 to 16, wherein the inner region is at a subatmospheric pressure.

18. Process according to any of Claims 14 to 16, wherein the liquid substance is superheated.

19. Process for producing a polymerizable substance, wherein the polymerizable substance is synthesized from at least one reactant in a reactor and subsequently subjected to a process for purification as defined in any of Claims 14 to 18.

## Revendications

1. Colonne (1) destinée à la distillation d'une substance capable de polymériser, selon laquelle la colonne (1) comprend une cuve (2) avec une platine inférieure (8), ainsi qu'au moins une alimentation (4) pour la substance capable de polymériser, laquelle alimentation (4) mène dans une zone interne (5) de la colonne (1),
**caractérisée en ce que** des moyens sont prévus, lesquels sont destinés à la répartition homogène de la substance dans la cuve (2) ;
selon laquelle l'au moins une alimentation (4) possède un orifice de sortie (14) ;
selon laquelle au moins un régulateur d'écoulement (15) est disposé sur un tronçon (18) de l'au moins une alimentation (4), de préférence tout au moins à proximité de l'orifice de sortie (14) ; et
selon laquelle l'au moins un régulateur d'écoulement (15) présente tout au moins une tôle de guidage (16), de telle sorte qu'une majorité de canaux (17) est formée sur le tronçon (18) de l'alimentation (4) ; ; et
selon laquelle l'au moins une alimentation (4) présente une courbure (99) et l'au moins un régulateur d'écoulement (15) est un mélangeur de flux (98), lequel est prévu en amont, à proximité de la courbure (99), lequel divise la substance affluente capable de polymériser en plusieurs trajets de courant (100) et lequel dévie ces derniers de telle sorte qu'ils parcourent, pour l'essentiel, le même cheminement à travers la courbure (99).

2. Colonne (1) selon la revendication 1, selon laquelle l'au moins une alimentation (4) possède un orifice d'entrée (13) et un orifice de sortie (14) ;
selon laquelle l'orifice de sortie (14) est disposé plus près de la platine inférieure (8) de la colonne (1) que l'orifice d'entrée (13) et l'au moins une alimentation (4) possède un orifice de sortie (14) qui, pour l'essentiel, est disposé parallèlement à la platine inférieure (8).

3. Colonne (1) selon l'une des revendications précédentes, selon laquelle l'au moins une alimentation (4) possède un orifice de sortie (14) ;
selon laquelle au moins un répartiteur de flux (20) est disposé dans la zone interne (5) de la colonne (1), en particulier de manière centrique par rapport à un axe central (19) de l'orifice de sortie (14).

4. Colonne (1) selon la revendication 3, selon laquelle l'au moins un répartiteur de flux (20) est conçu en forme de cône, tout au moins en partie ;
selon laquelle une crête (21) du répartiteur de flux (20) est disposée sur l'axe central (19) de l'orifice de sortie (14), de telle sorte que la crête (21) est située le plus près possible de l'orifice de sortie (14).

5. Colonne (1) selon l'une des revendications précédentes, selon laquelle la cuve (2) comprend tout au moins une surface de guidage (61).

6. Colonne (1) selon l'une des revendications précédentes, selon laquelle l'au moins une alimentation (4) présente des moyens destinés à l'isolation thermique vis-à-vis de la zone interne (5).

7. Colonne (1) selon la revendication 6, selon laquelle les moyens destinés à l'isolation thermique sont disposés sur tout au moins une zone partielle (9) de l'alimentation (4), laquelle s'étend jusque dans la zone interne (5) de la colonne (1).

8. Colonne (1) selon la revendication 6 ou 7, selon laquelle les moyens destinés à l'isolation thermique sont formés par l'intermédiaire d'une alimentation (4), laquelle est constituée, tout au moins en partie, d'un matériau thermiquement isolant.

9. Colonne (1) selon l'une des revendications 6 à 8, selon laquelle l'au moins une alimentation (4) possède plusieurs enveloppes (10), selon laquelle une couche thermiquement isolante (11) est de préférence prévue entre tout au moins deux enveloppes (10).

10. Colonne (1) selon la revendication 9, selon laquelle la couche thermiquement isolante (11) est un vide ; selon laquelle, de manière préférée, tout au moins une surface intérieure (12) des plusieurs enveloppes (10) est réfléchissante.

11. Colonne (1) selon l'une des revendications précédentes, selon laquelle l'au moins une alimentation (4) présente, tout au moins dans une section partielle (7), un revêtement (22) qui présente des propriétés d'adhérence réduites pour les liquides, par rapport à l'acier.

12. Colonne (1) selon l'une des revendications précédentes, selon laquelle l'au moins une alimentation (4) est disposée entre la platine inférieure (8) et un fond de séparation (23).

13. Colonne (1) selon l'une des revendications précédentes, selon laquelle la cuve (2) présente une majorité de fonds de séparation (23) et au moins un système de pulvérisation (101) est prévu, au moyen duquel une face inférieure (105) de tout au moins un fond de séparation (23) peut être aspergée avec la substance capable de polymériser.

14. Procédé destiné à la purification d'une substance capable de polymériser, selon lequel la substance capable de polymériser est introduite, par l'intermédiaire de l'alimentation (4), dans une colonne (1) de distillation qui est définie dans l'une des revendications 1 à 16, alors que la substance se trouve à l'état liquide, et est transférée dans la zone interne (5), alors que la substance se trouve dans une phase gazeuse.

15. Procédé selon la revendication 14, selon lequel la substance qui se trouve en phase gazeuse afflue, avec une densité isotrope, en direction d'un premier fond de séparation (23), lequel est disposé au-dessus de l'alimentation (4) ;
selon lequel la déviation maximale à l'intérieur d'un plan situé entre l'alimentation (4) et le premier fond de séparation (23) s'élève tout au plus à 15 % par rapport à une valeur moyenne de la densité isotrope.

16. Procédé selon la revendication 14 ou 15, selon lequel la substance capable de polymériser est de l'acide (méth)acrylique.

17. Procédé selon l'une des revendications 14 à 16, selon lequel une pression négative existe dans la zone interne.

18. Procédé selon l'une des revendications 14 à 16, selon lequel la substance est surchauffée à l'état liquide.

19. Procédé destiné à la fabrication d'une substance capable de polymériser, selon lequel la substance capable de polymériser est synthétisée dans un réacteur à partir d'au moins un produit de départ, puis est ensuite soumise à un procédé de purification, tel que défini dans l'une des revendications 14 à 18.
